# EUROPÄISCHE PATENTSCHRIFT

(11) **EP 3 635 635 B1**
(45) Veröffentlichungstag und Bekanntmachung des Hinweises auf die Patenterteilung: **16.02.2022**
(21) Anmeldenummer: 18740085.8
(22) Anmeldetag: 08.06.2018
(51) Int. Cl.: G06K 19/077, G06K 19/07, G06K 19/02

(54) **VORRICHTUNG INSBESONDERE DRUCKERZEUGNIS ZUR DATENKOMMUNIKATION**
DEVICE IN PARTICULAR PRINTED ITEM FOR DATA COMMUNICATION
DISPOSITIF, EN PARTICULIER PRODUIT D'IMPRESSION POUR LA COMMUNICATION DE DONNÉES

(30) Priorität: 09.06.2017 AT 600492017; 03.09.2017 AT 600842017; 19.11.2017 AT 601292017; 19.01.2018 AT 500422018
(43) Veröffentlichungstag der Anmeldung: 15.04.2020
(73) Patentinhaber: Interactive Paper GmbH, 1120 Wien (AT)
(72) Erfinder: BESNIER, Raphael, 1030 Wien (AT); MACKE, Tobias, 2380 Perchtoldsdorf (AT)
(74) Vertreter: Wildhack & Jellinek
(86) Internationale Anmeldenummer: PCT/AT2018/060119
(87) Internationale Veröffentlichungsnummer: WO 2018/223171

(56) Entgegenhaltungen:
- WO-A1-2016/085270
- CN-A- 105 893 893
- DE-B3-102013 223 505
- US-A1- 2016 180 210

## Beschreibung

Die Erfindung betrifft eine Vorrichtung, insbesondere ein Druckerzeugnis, nach Anspruch 1 und eine Anordnung nach Anspruch 13.

In den folgenden Ausführungen wird als "leitend" bzw. "leitfähig", sofern nichts anders angegeben ist, immer "elektrisch leitend" bzw. "elektrisch leitfähig" verstanden. Ebenso wird als "isolierend", sofern nichts anders angegeben ist, immer "elektrisch isolierend" verstanden.

Die Erfindung betrifft insbesondere eine Vorrichtung, umfassend einen Träger, eine Anzahl von auf dem Träger angeordneten im Ausgangszustand unterbrochenen Schaltern, eine Anzahl von einem Schalter zugeordneten NFC-Chips und eine NFC-Antenne,
- wobei die Schalter und die ihnen zugeordneten NFC-Chips miteinander in Serie geschaltet sind und an die NFC-Antenne angeschlossen sind.

Erfindungsgemäß ist insbesondere vorgesehen,
- dass die Vorrichtung ein Etikett umfasst, das mit dem Träger flächig in Verbindung gebracht ist,
- dass die einzelnen NFC-Chips auf dem Etikett angeordnet sind,
- dass die Schalter auf dem Träger nicht auf dem Etikett angeordnet sind,
- dass zur elektrischen Verbindung der Schalter, der NFC-Chips und der NFC-Antenne auf dem Träger, und
- dass auf dem Etikett und auf dem Träger einander zugewandte Kontaktstellen vorgesehen sind, die die Leiterbahnen miteinander kontaktieren.

Aus dem Stand der Technik ist eine Vielzahl an Vorrichtungen bekannt, die es einem Benutzer ermöglichen, mittels NFC-Technologie eine bestimmte Information auszuwählen und aufzurufen bzw. eine aktiv anzuzeigende bzw. zu übermittelnde Information festzulegen und an das jeweilige NFC-Gerät zu übertragen. Aus der Veröffentlichung US 2008061148 A1 ist beispielsweise eine elektronische Zahlungskarte mit einem eingebauten Schalter bekannt, die es ermöglicht, mittels RFID-Technologie zwischen zwei verschiedenen Kontonummern zu wählen.

Die Veröffentlichung US 2008094181 A1 zeigt eine auf RFID-Technologie basierende Fernbedieneinheit mit einer Vielzahl von RFID-Modulen und Schaltern, wobei ein Benutzer bei Betätigung eines der Schalter jeweils den mit einem RFID-Modul verbundenen Befehl durchführen lassen kann. Die Veröffentlichung zeigt eine Vielzahl von Modulen mit jeweils einer Antenne, die auf unterschiedliche Weise und unabhängig voneinander Informationen aufnehmen, weiterleiten und weiter übertragen, insgesamt lässt sich jedoch mit jedem RFID-Modul jeweils nur ein einziger Befehl durchführen.

Grundsätzlich besteht gerade im Bereich gedruckter Medien ein erheblicher Bedarf nach Lösungen, in denen Druck und digitale Inhalte miteinander sinnvoll verknüpft werden können. Unter den Nutzern besteht dabei wenig Interesse, über QR-Codes oder NFC-Tags herkömmlicher Art Zusatzinformationen zu erhalten.

Besonders im Bereich der Druckmedien sind Technologien, die einem Leser ein intuitives Interagieren mit Druckmedien ermöglichen, von Interesse. Dabei sind NFC-Tags, die beispielsweise in ein Material wie Papier integriert sind, bekannt. Diese ermöglichen es einem Benutzer, einen einzigen auf dem NFC-Tag hinterlegten Link mit einem NFC-fähigen Datenübertragungsgerät aufzurufen.

Diese Vorgehensweise stellt vor allem einen produktions- und kostentechnischen Nachteil dar. Die Anzahl der Links, die mittels herkömmlicher NFC Tags in eine Druck-Anwendung integriert werden können, ist sehr begrenzt. Jeder weitere Link benötigt in der Produktion eine weitere Aufspendeeinheit eines weiteren NFC Tags und verursacht somit erhebliche Kosten. Zudem können, aufgrund der dauerhaften Aktivierung der Tags, Links ungewollt aufgerufen werden, wenn sich ein NFC-fähiges Datenkommunikationsgerät in der Nähe eines NFC-Tags befindet, ebenso kann das Aufrufen eines Links durch andere NFC-Tags gestört werden, was zu Unannehmlichkeiten in der Nutzung führt.

Zudem besteht der Nachteil, dass der Nutzer vom gedruckten Inhalt weg und hin zu seinem Mobiltelefon geleitet wird. Das Problem für Printmedien besteht darin, dass keine Rück-Verknüpfung besteht, welche den Leser erneut zum gedruckten Inhalt leitet. Somit riskiert der Herausgeber für den ergänzenden digitalen Inhalt eine hohe Absprungrate vom Print-Medium.

Die Nachteile von QR-Codes sind vor allem die wenig ansprechende Optik sowie die geringe Benutzer-Freundlichkeit, da die Nutzung von QR-Codes bei den meisten Smartphones immer noch die Verwendung einer zusätzlichen App benötigt; dies stellt eine große Barriere dar. Ebenso benötigt auch der Gesamtvorgang des Einlesens des QR-Codes, also das Öffnen der App und das Scannen etc. eine gewisse Zeit, was die Verwendung von QR-Codes nicht viel einfacher oder benutzerfreundlicher gestaltet als beispielsweise eine Internetsuche.

Die Erfindung hat in diesem Zusammenhang die Aufgabe, dem Kunden eine interaktive Eingriffsmöglichkeit zu bieten, die durch die haptische Berührung des Papiers ermöglicht wird und ein einfaches und schnelles Aufrufen von mehreren optionalen Informationen bzw. Links bietet. Für den Hersteller ist es dabei von Vorteil, wenn er die Position der Schalter, allenfalls in spezifischen Fällen auch das Design der NFC-Antenne, flexibel festlegen kann. Ebenso ist es von Vorteil, wenn das Druckwerk kostengünstig über allgemein verfügbare bzw. nur mit geringen Modifikationen erzielbare Druckprozesse hergestellt werden kann. Von Vorteil ist es weiter, wenn das für den Druck verwendete Papier sehr dünn ist bzw. dass der Benutzer oder Leser kaum etwas von den verwendeten elektronischen Komponenten merkt. Darüber hinaus ist es zu vermeiden, dass in das Papier Energiespeicher integriert werden müssen.

Aufgabe der Erfindung ist es weiters, eine Vorrichtung bereitzustellen, bei der ein Benutzer interaktiv eine Mehrzahl an über NFC-Technologie zu übertragende Informationen auswählen kann, ohne dass für jede anzuzeigende Information ein separater NFC-Tag vorgesehen sein muss. Ebenso ist es Aufgabe der Erfindung, eine solche Vorrichtung mit Methoden herzustellen, die nur geringfügige Modifikationen gegenüber Standard-Druckprozessen erfordern.

Die Erfindung löst diese Aufgabe mit einer Vorrichtung der eingangs genannten Art umfassend
- einen, vorzugsweise flexiblen, Träger, insbesondere bestehend aus Papier oder Karton,
- eine Anzahl von auf dem Träger angeordneten in ihrem jeweiligen Ausgangszustand unterbrochenen Schaltern,
- eine Anzahl von jeweils zumindest einem Schalter zugeordneten NFC-Chips,
- eine NFC-Antenne,
- wobei die Schalter und die ihnen zugeordneten NFC-Chips miteinander in Serie geschaltet sind und die so erstellten einzelnen Serienschaltungen umfassend jeweils einen den Schalter und den ihm zugeordneten NFC-Chip jeweils an die NFC-Antenne angeschlossen sind.

Erfindungsgemäß ist dabei vorgesehen, dass
- die Vorrichtung ein Etikett mit einem folienförmigen Grundkörper umfasst, wobei das Etikett mit dem Träger flächig in Verbindung gebracht ist,
- dass die einzelnen NFC-Chips auf dem Etikett angeordnet sind,
- dass die Schalter auf dem Träger in einem vom Etikett verschiedenen Bereich angeordnet sind,
- dass zur elektrischen Verbindung der Schalter, NFC-Chips und NFC-Antenne auf dem Träger, gegebenenfalls auch auf dem Etikett, Leiterbahnen vorgesehen sind, und
- dass auf dem Etikett und auf dem Träger einander zugewandte Kontaktstellen vorgesehen sind, die die Leiterbahnen auf dem Etikett und auf dem Träger miteinander elektrisch leitend kontaktieren.

Dass als Träger auch beispielsweise dünnes Papier verwendet werden kann und ein Benutzer die auf dem Träger befindlichen Leiterbahnen beim Berühren des Trägers nicht erfühlen kann, kann dadurch sichergestellt werden, dass die Leiterbahnen auf dem Etikett und/oder auf dem Träger elektrisch leitfähige Schichten sind, insbesondere mit einem elektrisch leitfähigem Lack oder mit einer elektrisch leitfähigen Tinte oder Folie erstellt sind oder daraus bestehen.

Um im Rahmen des Druckprozesses eine einfache Kontaktierung des Etiketts am Träger zu bewirken, kann vorgesehen sein, dass die einander zugewandten Kontaktstellen, insbesondere des Trägers, elektrisch leitfähige Schichten sind, insbesondere mit einem leitfähigen Lack, einer leitfähigen Folie oder einer elektrisch leitfähigen Tinte erstellt sind oder daraus bestehen, wobei der leitfähige Lack und/oder die Kontaktstellen oberflächlich leitend, vorzugsweise nicht oxidierend, ausgebildet sind.

Eine einfach zu erstellende Variante einer erfindungsgemäßen Vorrichtung, beispielsweise eines Druckerzeugnisses, sieht vor, dass die NFC-Antenne gemeinsam mit den NFC-Chips auf dem Etikett angeordnet ist.

Um die erforderlichen elektronischen Komponenten wirksam zu verdecken und um eine einfache Ausbildung vorteilhafter Schalter zu ermöglichen, kann ein weiterer Träger vorgesehen sein, insbesondere bestehend aus Papier oder Karton, vorzugsweise bestehend aus demselben Material wie der Träger, wobei das Etikett zwischen den beiden Trägern angeordnet ist.

Um für einen Benutzer einen Schalter bereitzustellen, der zwischen zwei Trägern haptisch unmerklich integriert werden kann und der eine positive Benutzererfahrung bietet und auch einfach bedient werden kann, kann vorgesehen sein, dass zumindest einer der Schalter durch zwei einander auf dem Träger und dem weiteren Träger einander gegenüberliegend und einander zugewandt angeordneten Schalterelementen ausgebildet ist, wobei zumindest eines der Schalterelemente eine isolierende dem jeweils anderen Schalterelement zugewandte Oberflächenschicht, insbesondere eine Oxidschicht, aufweist, die vorzugsweise zwischen den beiden Schalterelementen angeordnet ist und diese voneinander im Ausgangszustand elektrisch isoliert, insbesondere dass die Schalterelemente derart angeordnet sind, dass die zumindest eine isolierende Oberflächenschicht eines der Schalterelemente bei Beaufschlagung mit einer Kraft normal zur Ausdehnungsebene des Trägers bricht oder reißt oder elastisch verformt wird und ein Kontakt zwischen den beiden Schalterelementen entsteht und sich der Schalter somit im aktivierten Zustand befindet.

Darüber hinaus erweist sich ein derartiger Schalter auch als einfach und kostengünstig in der Produktion. Weiters wird durch diese Maßnahme erreicht, dass die erfindungsgemäße Vorrichtung sehr dünn ausgebildet sein kann.

Ein besonders einfach herzustellender Schalter bei dem eine einfachere Leiterbahnführung erreicht wird, sieht vor, dass
- die auf dem Träger verlaufenden Schalterelemente zwei durch eine Unterbrechung unterbrochene Anschlüsse aufweisen, die im Ausgangszustand voneinander elektrisch isoliert sind, und
- auf dem den Schalterelementen gegenüberliegenden Bereich des weiteren Trägers ein weiteres Schalterelement angeordnet ist, das dazu ausgebildet ist, bei Kraftbeaufschlagung in elektrisch leitenden Kontakt mit jedem der Anschlüsse des Schalterelements zu treten, derart die Unterbrechung zu überbrücken und die durch die Unterbrechung unterbrochenen Anschlüsse der Schalterelemente elektrisch leitend zu verbinden.

Um zu erreichen, dass ein Schalter nicht unbeabsichtigt oder aufgrund eines Produktionsfehlers dauerhaft leitend ist bzw. um zu vermeiden, dass ein Schalter während des in der Weiterverarbeitung der Vorrichtung durch die Integration in Druckerzeugnisse wie Zeitschriften vorgenommenen Übereinanderstapelns einer Vielzahl von Trägern aktiviert wird, kann vorgesehen sein, dass zumindest eines der Schalterelemente, gegebenenfalls beide Schalterelemente, durch eine Schicht aus leitendem Material mit oberflächlich isolierender Beschichtung, insbesondere aus oberflächlich oxidiertem Aluminium oder mit einem oberflächlich leitfähigen Material, insbesondere Silberleitlack, welches vorzugsweise mit einem partiell aufgetragenen, aushärtenden, und vorzugsweise elektrisch isolierenden, Material wie Relieflack oder UV-härtendem Klebstoff beschichtet ist, ausgebildet ist, und wobei gegebenenfalls das gegenüberliegende Schalterelement mit oberflächlich elektrisch leitfähigem Material, insbesondere Silberleitlack, ausgebildet ist.

Bevorzugt kann zu diesem Zweck vorgesehen sein, dass der Träger und der weitere Träger miteinander verklebt sind, und derjenige Bereich des Trägers und/oder des weiteren Trägers im Bereich der oder innerhalb einer Umgebung um die Schalterelemente von Klebstoff freigestellt ist.

Eine mit einer einfachen weiteren Produktionsvariante erstellbare Vorrichtung, bei der die Art und die Positionen der einzelnen Schalter flexibel festlegbar sind, sieht vor, dass die Schalter jeweils separat auf weiteren Etiketten angeordnet sind, wobei diese weiteren Etiketten auf dem Träger, gegebenenfalls zwischen den Trägern oder auf einem der Träger angeordnet sind.

Eine Vorrichtung die besonders einfach mittels Massenproduktion hergestellt werden kann und die Kosten der Massenproduktion gesenkt werden können, wobei einzelne Komponenten vorab gefertigt werden können, sieht vor,
- dass die NFC-Antenne und die NFC-Chips auf dem Etikett angeordnet sind,
- dass die NFC-Antenne auf dem Etikett, insbesondere aufgedruckt, geätzt oder ausgestanzt, ausgebildet ist und eine Mehrzahl von Windungen sowie einen Innenanschluss und einen Außenanschluss aufweist, und
- dass eine Überbrückung vorgesehen ist, die mit dem Innenanschluss elektrisch leitend verbunden ist, wobei die Überbrückung isoliert von den Windungen in den Bereich außerhalb der NFC-Antenne geführt ist,
- dass jeweils einer der Anschlüsse jedes der auf dem Etikett befindlichen NFC-Chips mit jeweils einer Kontaktstelle elektrisch leitend verbunden ist,
- dass der jeweils andere Anschluss jedes der auf dem Etikett befindlichen NFC-Chips über die Überbrückung mit dem Innenanschluss der NFC-Antenne elektrisch leitend verbunden ist,
- dass der Außenanschluss der NFC-Antenne an eine weitere auf dem Etikett angeordnete weitere Kontaktstelle elektrisch leitend angeschlossen ist, und
- dass jede der Kontaktstellen über eine auf dem Träger verlaufende Leiterbahn mit dem Außenanschluss über die weitere Kontaktstelle elektrisch leitend verbunden ist, wobei in jeder dieser Leiterbahnen jeweils ein im Ausgangszustand unterbrochener Schalter angeordnet ist.

Die Technik-Komponenten können dabei aufgrund ihrer Ausbildung als Etikett einfach aufgespendet werden und über ihre Kontaktstellen direkt flächig mit dem Träger elektrisch leitend verbunden werden.

Bei der Erstellung einer solchen Vorrichtung wird eine vorteilhafte Möglichkeit für die Kombination von NFC-Antenne und NFC-Chips mit den übrigen Komponenten geschaffen. Von Vorteil ist hierbei auch, dass eine initial unterbrochene NFC-Antenne an eine Mehrzahl an Chips gekoppelt werden kann und zu diesem Zweck Kontaktstellen für eine direkte, flächige Verknüpfung mit dem Trägermaterial bestehen. Dies ermöglicht eine Herstellung einer NFC-Kommunikation mit mehreren NFC-Chips mit flexibel wählbaren Schaltern in massentauglicher Form.

Ein Etikett zur Verwendung in einer solchen Vorrichtung bzw. einem Druckerzeugnis sieht vor,
- einen folienförmigen Grundkörper,
- eine auf dem Etikett aufgedruckt, geätzt oder ausgestanzt ausgebildete NFC-Antenne mit einer Anzahl von Windungen sowie einem Innenanschluss und einem Außenanschluss,
- eine Überbrückung, die mit dem Innenanschluss elektrisch leitend verbunden ist und isoliert von den Windungen in den Bereich außerhalb der NFC-Antenne geführt ist,
- wobei jeweils einer der Anschlüsse jedes der auf dem Etikett befindlichen NFC-Chips mit jeweils einer Kontaktstelle elektrisch leitend verbunden ist,
- dass der jeweils andere Anschluss jedes der auf dem Etikett befindlichen NFC-Chips über die Überbrückung mit dem Innenanschluss der NFC-Antenne elektrisch leitend verbunden ist, und
- dass der Außenanschluss der NFC-Antenne an eine auf dem Etikett angeordnete weitere Kontaktstelle elektrisch leitend angeschlossen ist.

Um erfindungsgemäße Vorrichtungen mit besonders geringer Dicke und besonders geringer Fläche der Etiketten herstellen zu können, kann vorgesehen sein,
- dass die NFC-Antenne auf dem Träger aufgedruckt, geätzt oder ausgestanzt ausgebildet ist und eine Mehrzahl von Windungen sowie einen Innenanschluss und einen Außenanschluss aufweist, wobei die einzelnen Windungen der NFC-Antenne in zumindest einem Überbrückungsbereich nebeneinander beabstandet, insbesondere parallel, verlaufen,
- dass das Etikett den Überbrückungsbereich überragend angeordnet ist und eine Kontaktstelle aufweist, die mit dem Innenanschluss der NFC-Antenne elektrisch leitend kontaktiert ist,
- dass jeweils ein Anschluss der auf dem Etikett befindlichen NFC-Chips elektrisch leitend mit dieser Kontaktstelle verbunden ist, und
- dass der jeweils andere Anschluss jedes der auf dem Etikett befindlichen NFC-Chips mit jeweils einer weiteren Kontaktstelle mit einem Bereich des Trägers leitend kontaktiert ist, der sich außerhalb der NFC-Antenne befindet, und
- dass jede der weiteren Kontaktstellen über jeweils eine der auf dem Träger verlaufenden Leiterbahnen mit dem Außenanschluss der NFC-Antenne elektrisch leitend verbunden ist, wobei in jeder der Leiterbahnen jeweils ein im Ausgangszustand unterbrochener Schalter angeordnet ist.

Weiters ist Antennengröße und Antennenform der gewünschten Anwendung oftmals von der Zielgruppe des jeweiligen Druckerzeugnisses und deren NFC-fähigen Geräten abhängig. Durch die Verwendung des vorgeschlagenen Etiketts ergibt sich der Vorteil, dass die NFC-Antenne von der Größe und Form her in der Serienproduktion komplett variabel gedruckt werden kann, sodass das Etikett für eine Vielzahl von Anwendungsfällen mit unterschiedlichen Antennen und Empfängergeräten verwendet werden kann.

Eine NFC-Kommunikation ist mit einer Vielzahl an Datenkommunikationsgeräten besonders einfach und zuverlässig herstellbar, wenn die NFC-Antenne
- Außenabmessungen mit einer Breite von 40 bis 80 mm, insbesondere 60 bis 80 mm, und einer Höhe von 110 bis 150 mm, vorzugsweise einer Breite von 74 mm und einer Höhe von 131 mm aufweist und/oder
- eine Anzahl von 3 bis 7 Windungen, insbesondere mit einer Linienstärke von jeweils kleiner als 3 mm, vorzugsweise 4 Windungen mit einer Linienstärke von 1,5 bis 2,5 mm und einer Schichtdicke von kleiner oder gleich 40 µm, insbesondere, wenn die NFC-Antenne mittels Silberleitlack im Siebdruckverfahren auf Papier gedruckt wird, aufweist, und/oder
- insbesondere einen Gesamtwiderstand von kleiner oder gleich 25 Ohm aufweist.

Ein weiteres Etikett zur Verwendung in einer solchen Vorrichtung bzw. einem Druckerzeugnis sieht vor
- einen folienförmigen Grundkörper,
- eine Kontaktstelle, insbesondere zum Anschluss an den Innenanschluss einer NFC-Antenne,
- eine Anzahl von auf dem Etikett befindlichen NFC-Chips, wobei jeweils ein Anschluss der NFC-Chips elektrisch leitend, insbesondere über Leiterbahnen, mit dieser Kontaktstelle verbunden ist,
- eine Anzahl von weiteren Kontaktstellen, wobei der jeweils andere Anschluss jedes der auf dem Etikett befindlichen NFC-Chips mit jeweils einer weiteren Kontaktstelle elektrisch leitend kontaktiert ist, und
- einen isolierend ausgebildeten Überbrückungsbereich der den Oberflächenbereich, in dem die Kontaktstelle angeordnet ist von dem Oberflächenbereich, in dem die weiteren Kontaktstellen angeordnet sind, voneinander abtrennt, wobei der Überbrückungsbereich insbesondere dazu ausgebildet ist, jedes leitende Element des Etiketts im Überbrückungsbereich und die überbrückten Windungen, voneinander elektrisch zu isolieren.

Eine erfindungsgemäße Anordnung zum einfachen Übertragen von Daten mittels NFC-Technologie sieht eine erfindungsgemäße Vorrichtung sowie ein NFC-fähiges Datenkommunikationsgerät, das durch Betätigen von einem der Schalter über die NFC-Antenne mit einem der NFC-Chips in Datenkommunikationsverbindung steht, vor.

Ein Schalter zur Verwendung in einer erfindungsgemäßen Vorrichtung bzw. einem Druckerzeugnis, kann zwei Träger sowie auf einem der Träger sowie einander auf dem Träger und dem weiteren Träger einander gegenüberliegend und einander zugewandt angeordnete Schalterelemente umfassen, wobei zumindest eines der Schalterelemente eine isolierende dem jeweils anderen Schalterelement zugewandte Oberflächenschicht, insbesondere eine Oxidschicht, aufweist, die vorzugsweise zwischen den beiden Schalterelementen angeordnet ist und diese voneinander im Ausgangszustand elektrisch isoliert, insbesondere dass die Schalterelemente derart angeordnet sind, dass die zumindest eine isolierende Oberflächenschicht eines der Schalterelemente bei Beaufschlagung mit einer Kraft normal zur Ausdehnungsebene des Trägers bricht oder reißt oder elastisch verformt wird und ein Kontakt zwischen den beiden Schalterelementen entsteht.

Um sicherzustellen, dass ein Schalter nicht unerwünschterweise, beispielsweise beim Stapeln von erfindungsgemäßen Vorrichtungen bzw. Druckerzeugnissen, seine Funktionsweise verliert oder durch schwere Lasten beschädigt wird, kann vorgesehen sein
- dass die auf dem Träger verlaufenden Schalterelemente zwei durch eine Unterbrechung unterbrochene Anschlüsse aufweisen, die im Ausgangszustand voneinander elektrisch isoliert sind, und
- dass auf dem dem Schalterelement gegenüberliegenden Bereich des weiteren Trägers ein weiteres Schalterelement angeordnet ist, das dazu ausgebildet ist, bei Kraftbeaufschlagung in elektrisch leitenden Kontakt mit jedem der Anschlüsse des Schalterelements zu treten, derart die Unterbrechung zu überbrücken und die durch die Unterbrechung unterbrochenen Anschlüsse der Schalterelemente elektrisch leitend zu verbinden. Weiters wird mit dieser Maßnahme eine einfachere Leiterbahnführung erreicht.

Um zu erreichen, dass ein Schalter nicht unbeabsichtigt oder aufgrund eines Produktionsfehlers dauerhaft leitend ist bzw. um zu vermeiden, dass ein Schalter während des im Produktionsprozess und vor allem in der Weiterverarbeitung der Druckerzeugnisse vorgenommenen Übereinanderstapelns einer Vielzahl von Trägern aktiviert wird, kann vorgesehen sein, dass zumindest eines der Schalterelemente, gegebenenfalls beide Schalterelemente, durch eine Schicht aus leitendem Material mit oberflächlich isolierender Beschichtung, insbesondere aus oberflächlich oxidiertem Aluminium oder mit einem oberflächlich leitfähigem Material, insbesondere Silberleitlack, welches vorzugsweise mit einem partiell aufgetragenem, aushärtendem, und vorzugsweise elektrisch isolierenden, Material wie Relieflack oder UV-härtendem Klebstoff beschichtet ist, ausgebildet ist, und wobei gegebenenfalls das gegenüberliegende Schalterelement mit oberflächlich elektrisch leitfähigem Material, insbesondere Silberleitlack, ausgebildet ist.

Bevorzugt kann zu diesem Zweck vorgesehen sein, dass der Träger und der weitere Träger miteinander verklebt sind, und derjenige Bereich des Trägers und/oder des weiteren Trägers im Bereich der oder innerhalb einer Umgebung um die Schalterelemente von dem die beiden Träger miteinander verbindenden Klebstoff freigestellt ist.

Ein Verfahren zur Herstellung einer erfindungsgemäßen Vorrichtung kann die folgenden Schritte vorsehen:
- Festlegen der Position eines Datenkommunikationsgeräts in Bezug auf den Träger und davon abhängig Festlegen der Position der NFC-Antenne gegenüber dem Träger,
- Festlegen der Position von Schaltern in Bezug auf den Träger,
- Zuordnen von auf dem Datenkommunikationsgeräts auszuführenden Steuerbefehlen oder Links zu den einzelnen Schaltern,
- Festlegen der Position des Etiketts und der Leiterbahnen in Bezug auf die festgelegten Positionen des Datenkommunikationsgeräts und der Schalter,
- insbesondere Auswahl eines Druckbilds und des Druckformats für den zur Herstellung der Vorrichtung verwendeten Träger und Bedrucken des Trägers mit dem Druckbild, vorzugsweise auf der den Leiterbahnen gegenüberliegenden Seite des Trägers,
- Aufbringen der Leiterbahnen auf den Träger,
- Erstellen oder Positionieren der Schalter oder von Schalterelementen auf dem Träger oder den Trägern,
- Programmieren der NFC-Chips und Übermittlung der Steuerbefehle oder Links an die NFC-Chips,
- Aufbringen des Etiketts und Kontaktieren der Kontaktstellen auf dem Träger mit den Kontaktstellen des Etiketts.

Um auch Vorrichtungen bzw. Druckerzeugnisse mit einer bedruckten Vorderseite und einer bedruckten Rückseite herstellen zu können, bei welcher man die technischen Komponenten, die sich zwischen den Trägern befinden, kaum erkennen kann, kann bei einem solchen Herstellungsverfahren vorgesehen sein
- Bereitstellen eines weiteren Trägers,
- insbesondere Auswahl eines Druckbilds für die dem Träger abgewandte Seite des weiteren Trägers und Festlegung des Druckformats des weiteren Trägers entsprechend dem Druckformat des Trägers und Bedrucken des weiteren Trägers entsprechend dem vorgegebenen Druckbild,
- gegebenenfalls Ausbildung weiterer Schalterelemente auf derjenigen Seite des weiteren Trägers, die den Leiterbahnen des Trägers zugewandt ist, in den Bereichen der Schalter,
- Zusammenfügen, insbesondere Verkleben, der einander zugewandten mit Schalterelementen versehenen Seiten des Trägers und des weiteren Trägers.

Ein vereinfachtes Herstellungsverfahren für eine beidseitig bedruckte Vorrichtung, das lediglich einen einzigen Träger benötigt, sieht vor
- insbesondere Aufbringen einer Grundierung auf der Seite, auf der sich die Leiterbahnen befinden und/oder Auswahl eines weiteren Druckbilds für diejenige Seite des Trägers der Vorrichtung, auf der sich die Leiterbahnen befinden, entsprechend dem Druckformat des Trägers, und
- Überdrucken der Seite des Trägers, auf der sich die Leiterbahnen befinden, mit dem ausgewählten weiteren Druckbild.

Ein einfaches Verfahren zur Herstellung einer Vorrichtung, mit der eine NFC-Kommunikation mit einer Vielzahl an Datenkommunikationsgeräten besonders einfach und zuverlässig erstellbar ist, sieht vor, dass anhand der Form und Position einer Anzahl von NFC-Reader-Antennen von vorgegebenen Datenkommunikationsgeräten, insbesondere von Mobiltelefonen, ein Flächenbereich ermittelt wird, der bezogen auf eine gegenüber dem Träger oder weiteren Träger in fixer Position und Ausrichtung festgelegte Kante, vorzugsweise die Oberkante, oder Position, beispielsweise der Mittelpunkt, des jeweiligen Datenkommunikationsgeräts, alle Positionen umfasst, die von den NFC-Reader-Antennen der betreffenden Datenkommunikationsgeräte umfasst oder abgedeckt sind, wenn diese nach einer einheitlichen Richtung ausgerichtet an der vorgegebenen Kante anliegen oder von der Position, wie beispielsweise den Mittelpunkten der Datenkommunikationsgeräte, her ausgerichtet sind,
- dass gegebenenfalls eine Markierung auf dem Träger oder auf dem weiteren Träger aufgebracht wird, die anzeigt, an welcher Stelle das Datenkommunikationsgerät zu platzieren ist, damit sich die jeweilige NFC-Reader-Antenne des entsprechenden Datenkommunikationsgeräts im Empfangsbereich der sich auf auf dem Träger oder auf dem Etikett befindlichen NFC-Antenne befindet, und
- dass die Position und Ausrichtung der NFC-Antenne gegenüber dem Träger oder dem weiteren Träger so festgelegt wird, dass die Außenabmessungen der NFC-Antenne den Flächenbereich flächig überdecken oder zumindest die Positionen, die von den NFC-Reader-Antennen der betreffenden Datenkommunikationsgeräte umfasst sind, in je mindestens einem Bereich flächig überschneiden.

Eine Schaltanordnung, die dazu geeignet ist, einen nicht mit einer NFC-Antenne versehenen NFC-Chip über eine ebenfalls nicht mit einer NFC-Antenne versehene NFC-Programmiereinheit zu programmieren bzw. zu beschreiben, kann eine NFC-Programmieranordnung umfassen, die dazu ausgebildet ist, in Kombination mit einer ihr nachgeschalteten Spule einen, ebenfalls mit einer Spule versehenen NFC-Chip zu programmieren. Dabei ist vorgesehen, dass
- dass ein Transformator vorgesehen ist,
- dass die Anschlüsse der NFC-Programmieranordnung an die Spule der ersten Seite eines Transformators angeschlossen sind, und vorzugsweise die andere Seite oder Spule des Transformators zum Anschluss an einen NFC-Chip vorgesehen ist,
- insbesondere dass parallel zur Spule ein Kondensator geschaltet ist, der so dimensioniert wird, dass der an der Programmiereinheit anliegende resultierende LC-Schwingkreis gegebenenfalls bei 13.56MHz resoniert.

Mit dieser Schaltanordnung ist es möglich, NFC-Chips auf einfache Weise auch dann bzw zu einem Zeitpunkt zu programmieren, wenn diese nicht mit einer NFC-Antenne versehen sind.

Weitere Vorteile und Ausgestaltungen der Erfindung ergeben sich aus der Beschreibung und den beiliegenden Zeichnungen.

Besonders vorteilhafte, aber nicht einschränkend zu verstehende Ausführungsformen der Erfindung werden im Folgenden anhand der beiliegenden Zeichnungen schematisch dargestellt und unter Bezugnahme auf die Zeichnungen beispielhaft beschrieben.

Im Folgenden zeigen schematisch:
Fig. 1 den schematischen Aufbau eines herkömmlichen NFC-Tags mit einer NFC-Antenne und einem NFC-Chip,
Fig. 2 die Anwendung eines herkömmlichen, in einem Träger integrierten, NFC-Tags,
Fig. 3 und Fig. 4 die prinzipielle Bedienung bei einer ersten erfindungsgemäßen Ausführungsform.
Fig. 5, Fig. 6 und Fig. 7 schematisch mögliche Schaltungsvarianten für die in Fig. 3 und Fig. 4 dargestellten Beispiele,
Fig. 8 eine Explosionsdarstellung einer ersten Ausführungsform der Erfindung mit einem Etikett, auf dem mehrere NFC-Chips und eine gemeinsame NFC-Antenne aufgebracht sind,
Fig. 9 das in Fig 8 dargestellte Etikett im Detail,
Fig. 10 schematisch die Verschaltung bei der in Fig. 8 dargestellten ersten Ausführungsform der Erfindung,
Fig. 11 eine zweite bevorzugte Ausführungsform der Erfindung,
Fig. 12 eine Elektronik-Druck-Layout-Ansicht der in Fig. 11 dargestellten Ausführungsform der Erfindung ohne Etikett und ohne ergänzende Schalterelemente,
Fig. 13 eine Schnittansicht eines Teils der in Fig. 11 dargestellten zweiten Ausführungsform im Bereich, in dem das Etikett die NFC-Antenne überbrückt,
Fig. 14 den schematischen Aufbau der in Fig. 11 dargestellten zweiten Ausführungsform,
Fig. 15 das in Fig. 11 dargestellte Etikett im Detail,
Fig. 16 die in Fig. 11 dargestellte NFC-Antenne mit offenem Überbrückungsbereich,
Fig. 17 eine erste Ausführungsform eines Schalters,
Fig. 18 den in Fig. 17 dargestellten Schalter in betätigtem Zustand,
Fig. 19 eine zweite Ausführungsform eines Schalters,
Fig. 20 den in Fig. 19 dargestellten Schalter in betätigtem Zustand,
Fig. 21 eine dritte Ausführungsform eines Schalters,
Fig. 22 den in Fig. 21 dargestellten Schalter in betätigtem Zustand,
Fig. 23 eine vierte Ausführungsform eines Schalters,
Fig. 24 den in Fig. 23 dargestellten Schalter in betätigtem Zustand,
Fig. 25 eine vierte Ausführungsform eines Schalters,
Fig. 26 den in Fig. 25 dargestellten Schalter in betätigtem Zustand,
Fig. 27, 28, 29 und 30 beispielhaft eine Ausführungsform einer Herstellungsvariante,
Fig. 31 eine bevorzugte Schaltanordnung zum Beschreiben von NFC-Chips,
Fig. 32 einen Flächenbereich zur Kommunikation mit einer Vielzahl von Mobilfunkgeräten mit unterschiedlichen NFC-Reader-Antennenformen und -positionen,
Fig. 33 die unterschiedlichen NFC-Reader-Antennenformen der Datenkommunikationsgeräte,
Fig. 34 ein Ausführungsbeispiel einer Antennengeometrie,
Fig. 35 und 36 zwei Überlagerungs-Darstellungen von NFC-Antennen der Vorrichtung und verschiedenen NFC-Reader-Antennen von gegenwärtigen Datenkommunikationsgeräten.

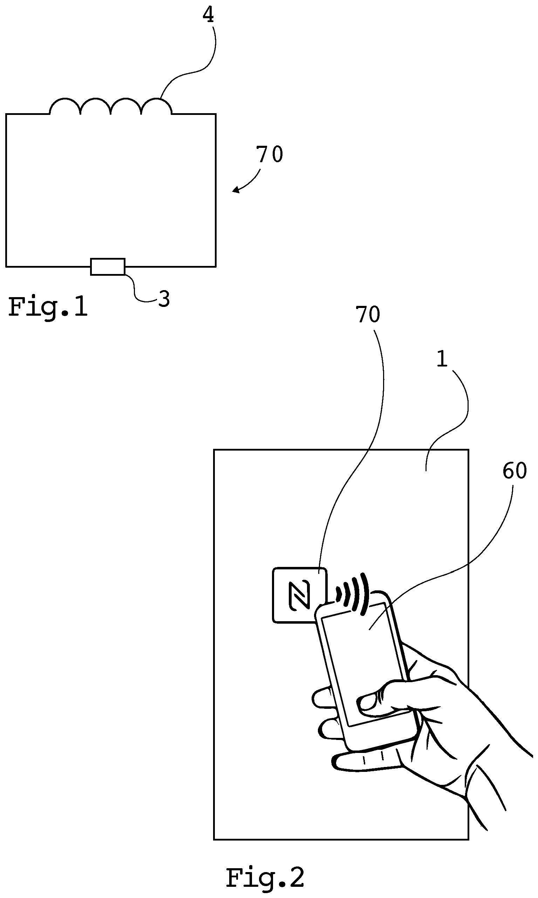

**Fig. 1** und **Fig. 2** zeigen schematisch den Aufbau eines aus dem Stand der Technik bekannten NFC-Tags 70 mit einer NFC-Antenne 4 und einem einzigen NFC-Chip 3 sowie die prinzipielle Funktionsweise bzw. Bedienung eines aus dem Stand der Technik bekannten NFC-Tags 70. Nähert ein Benutzer sein NFC-fähiges Datenkommunikationsgerät 60 an den NFC-Tag 70 an, findet mittels elektromagnetischer Induktion eine Kopplung der NFC-Antenne 4 des NFC-Tags 70 und einer weiteren NFC-Reader-Antenne 61 des mobilen NFC-fähigen Datenkommunikationsgerät 60 statt, sodass ein Datenaustausch zwischen dem NFC-Tag 70 und dem NFC-fähigen Datenkommunikationsgerät 60 möglich ist.

Die zu übertragenden Daten sind dabei auf dem NFC-Chip 3 des NFC-Tags 70 gespeichert. Der NFC-Tag 70 besitzt üblicherweise keine eigene Energieversorgung und die zum Datenaustausch benötigte Energie wird dem elektrischen oder magnetischen Feld des Datenkommunikationsgeräts 60 entnommen.

Derartige NFC-Tags 70 mit einem integrierten Schaltkreis werden beispielsweise in Kundenkarten oder Bankomatkarten integriert, um ein kontaktloses Bezahlen mittels NFC-Technologie an NFC-fähigen Verkaufsorten zu ermöglichen. NFC-Tags 70 werden aber beispielsweise auch an Etiketten von Kleidungsstücken oder in Druckmedien integriert, um es einem Benutzer zu ermöglichen, mittels seines NFC-fähigen Datenübertragungsgeräts 60 auf dem NFC-Chip 3 hinterlegte Informationen aufzurufen. NFC-Tags 70 werden dazu in ein Material wie beispielsweise Papier, Polymer oder Stoff integ riert.

**Fig. 2** zeigt einen Träger 1, in Form einer Seite eines Druckerzeugnisses, wie beispielsweise ein Magazin, mit einem darauf angebrachten NFC-Tag 70, auf dem ein Link hinterlegt ist. Ein Benutzer bzw. Leser des Magazins kann durch Annähern eines mobilen NFC-fähigen Datenkommunikationsgeräts 60 den Link auf seinem NFC-fähigen Datenkommunikationsgerät 60 öffnen.

Dadurch kann sich der Benutzer beispielsweise Zugang zu weiteren Inhalten auf einer vorgegebenen Webseite, verschaffen, indem sich nach erfolgter Datenkommunikation auf seinem NFC-fähigen Datenkommunikationsgerät 60 die zugehörige Webseite öffnet. Nachteil bei derartigen NFC-Tags 70 ist allerdings, dass pro NFC-Tag 70 nur ein einziger Link hinterlegt werden kann.

Ein weiterer Nachteil derartiger NFC-Tags 70 ist, dass dem Benutzer nur eine beschränkte Möglichkeit zur Interaktion mit dem Druckmedium bereitgestellt ist.

Die in **Fig. 2** dargestellte Vorrichtung kann zwar grundsätzlich in Printmedien integriert werden und ist ebenfalls in dünnen Trägern, wie beispielsweise Papierseiten herstellbar,der mit der Verwendung einhergehende Mehrwert ist jedoch nicht sonderlich groß, da ebenso wie bei Verwendung eines QR-Codes nur ein einziger Link bzw. eine einzige Information übergeben werden kann und daher nur wenige Möglichkeiten der Interaktion bestehen. Der Leser wird vom gedruckten Inhalt weg zu seinem NFC-fähigen Gerät geführt. Insbesondere besteht auch keine Rück-Verknüpfung zu diesem Medium, die den Leser erneut zum gedruckten Inhalt leiten würde. Somit riskiert der Herausgeber bei Bereitstellung des ergänzenden digitalen Inhalts eine hohe Absprungrate vom Print-Medium.

Darüber hinaus ist der hier gezeigte NFC-Tag durchgehend aktiv, was es, zusätzlich zu den hohen Stück- und Produktionskosten, die für jeden weiteren anzubringenden NFC-Tag anfallen, schwierig macht, mehrere dieser NFC-Tags in ein Print-Medium zu integrieren. Denn werden mehrere dieser NFC-Tags in ein Print-Medium integriert, können aufgrund der geringen flächigen Ausdehnung von Print-Medien, wie beispielsweise Zeitschriften, unerwünschterweise Informationen eines anderen NFC-Tags, die der Leser nicht wünscht, aufgerufen werden, da mehrere NFC-Tags 70 gleichzeitig zur Datenübertragung mit dem NFC-fähigen Datenkommunikationsgerät 60 bereit sind.

Die Erfindung schafft diesbezüglich Abhilfe und ermöglicht es einem Benutzer, interaktiv beispielsweise auf einer Seite eines Druckmediums mittels in den Träger 1 integrierter Schalter zwischen einer Anzahl an anzuzeigenden Daten zu wählen und nur den gewünschten Inhalt auf einem NFC-fähigen Datenkommunikationsgerät 60 anzuzeigen.

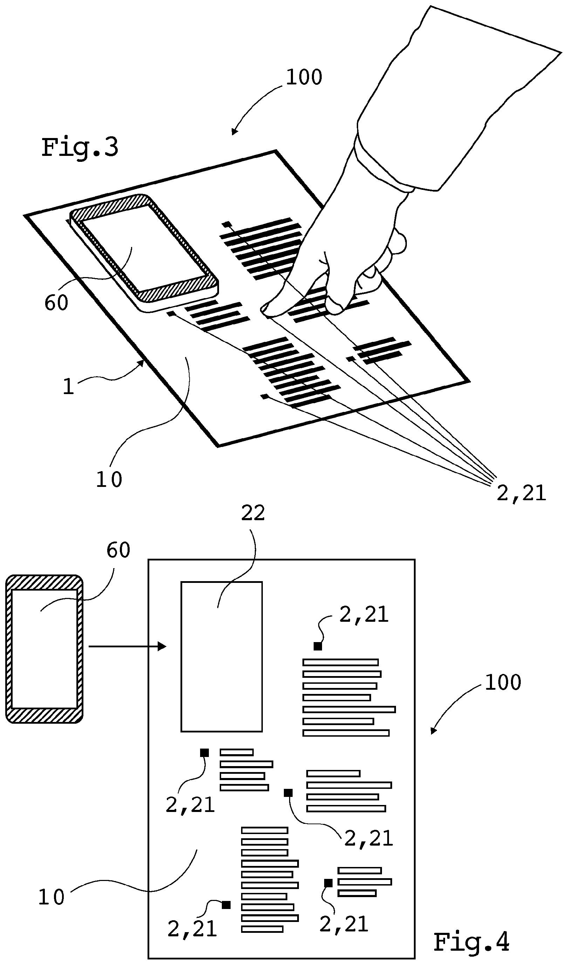

**Fig. 3** zeigt eine Vorrichtung 100 in Form eines Druckerzeugnisses, umfassend einen Träger 1 und einen weiteren Träger 10 mit fünf zwischen den zwei Trägern 1, 10 angeordneten Schaltern 2, die in ihrem jeweiligen Ausgangszustand unterbrochen sind. Die Schalter 2 sind zwischen dem Träger 1 und dem weiteren Träger 10 angeordnet. Die Position der Schalter 2 ist auf dem Träger 10 mit Markierungen 21 gekennzeichnet, die sich an einer dem Benutzer zugewandten Seite der Vorrichtung 100 auf dem Träger 10 befinden. **Fig. 3** zeigt weiters ein auf der Vorrichtung 100 platziertes mobiles NFC-fähiges Datenkommunikationsgerät 60.

Die Träger 1, 10 der in **Fig. 3** dargestellten erfindungsgemäßen Vorrichtung 100 sind dabei aus einem flexiblen Material, wie beispielsweise Papier oder Karton, ausgestaltet. Das Anbringen der Schalter 2 auf der Vorrichtung 100 ermöglicht es einem Benutzer, interaktiv durch Berühren des weiteren Trägers 10 bestimmte Informationen aufzurufen. Dabei kann der Benutzer durch Betätigen eines Schalters 2 die dem Schalter 2 zugeordnete Information abrufen.

In **Fig. 4** ist das Graphik-Druck-Layout der in **Fig. 3** gezeigten Vorrichtung 100 dargestellt. Die Vorrichtung 100 umfasst einen Träger 1 sowie fünf Schalter 2, welche jeweils durch Markierungen 21 an einer dem Benutzer im Verwendungszustand zugewandten Seite, dem Träger 10, markiert sind. Auf dem weiteren Träger 10 ist weiters eine Markierung 22 angebracht, welche die Position, auf der ein NFC-fähiges Datenkommunikationsgerät 60 im Verwendungszustand zu platzieren ist, anzeigt.

Bei der in **Fig. 4** dargestellten Vorrichtung 100, beispielsweise einer Seite aus einer Zeitschrift, sind die Schalter 2 bzw. die Markierungen 21 jeweils über bzw. seitlich eines Textblocks angebracht. Die Position der Schalter 2 wird dabei bei der Herstellung der Vorrichtung 100 bzw. im Druckprozess der Zeitschrift die im Layout vorgegebene Position der Markierungen 21, 22 angepasst. Durch die Markierung 21 der Schalter 2 im Druckbild wird dem Benutzer die Position zur Kenntnis gebracht, an der sich die Schalter 2 befinden und welche Informationen aufgerufen werden können.

**Fig. 3 und 4** zeigen die prinzipielle Bedienung bei einer erfindungsgemäßen Ausführungsform. Die erfindungsgemäße Ausführungsform bietet für Herausgeber von Print-Medien als auch für die Benutzer bzw. Leser eine Vielzahl an Vorteilen gegenüber herkömmlichen NFC Anwendungen und auch gegenüber Software-technischen Versuchen von Verknüpfungen zwischen Druck- und Digitalmedium. Die erfindungsgemäße Vorrichtung 100 ermöglicht es, eine Mehrzahl an Links durch die Berührung von markierten Stellen auf jener Oberfläche aufzurufen. Durch Innovation in den Bereichen Produktionsverfahren, NFC-Komponenten, Schaltern und Verknüpfung zwischen Elektronik und Druck ermöglicht es die Erfindung, jene Technologie für den Nutzer kaum merkbar innerhalb eines Druckprozesses zwischen dünne Papierschichten zu integrieren.

Das Aufrufen mehrerer Links über eine einzige NFC-Antenne 4 durch Berührungen des Trägers 100 bietet die Erweiterung eines Aufbaus an weiterführenden Inhalten, durch welchen neue Abwicklungen von Prozessen innerhalb einer Verknüpfung zwischen Druck- und Digitalmedien ermöglicht werden. Beispielsweise können sich die am Trägermaterial markierten Stellen in einer Reihenfolge befinden. Die über die Links ausgeführten Vorgänge können über die Cookies der aufgerufenen Website gespeichert werden. Die nächst durch Betätigung der Schalter aufgerufenen Inhalte können auf die über die vorherigen Schalter durchgeführten Vorgängen aufbauen. Somit wird eine neue Form der Abwicklung von Prozessen über ein haptisches Medium in Verknüpfung mit Elektronik möglich. Dies bietet wertvolle neue Optionen für das Bestellen von Produkten in den Branchen des Handels und der Gastronomie.

Ein weiterer signifikanter Faktor ist die Berührung des Papiers, die sich als Mittel des Multisensorischen Marketings als besonders wirkungsvoll erweist. So ist es wissenschaftlich erwiesen, dass eine ansprechende Haptik im Marketing die Tendenz zum Kaufabschluss verstärkt sowie, dass haptisch erfahrene Informationen schneller gelernt und erinnert werden. Durch die interaktive Beschäftigung mit beispielsweise einer Werbeanzeige bindet sich der Nutzer emotional zu dem Thema. Somit wird eine Resonanz und Merkfähigkeit im Konsumenten geweckt.

Dies bietet beispielsweise Print-Medien erhebliche Vorteile sowohl für redaktionelle Inhalte, als auch Werbung. Der Leser kann über mehrere Schalter zur Durchführung mehrerer Vorgänge geleitet werden.

Durch die Verbindung zwischen Print- und Digitalmedium können beispielsweise Leserzahlen und weitere Conversions direkt aus dem Druckmedium ausgelesen bzw. abgeleitet werden. Das Interesse des individuellen Kunden kann durch die Anzahl der jeweiligen Berührungen der Schalter und das Aufrufen der Informationen über das Smartphone in Erfahrung gebracht werden.

Somit ist die erfindungsgemäße Vorrichtung auch zu Marktforschungszwecken besonders interessant. Auch integriert in Verpackungen kann sie sinnvoll eingesetzt werden, um eine bestimmte Kommunikationsfunktion im Rahmen des Verkaufs zu erfüllen

Bei der Nutzung durch den Endverbraucher kann eine positive Benutzererfahrung durch beispielsweise interaktive, ansprechende und leicht verständliche Bedienungsanleitungen erzielt werden, in die allenfalls auch Erklärvideos oder andere multimediale Inhalte eingebunden werden können, um eine Kundenbindung durch Verknüpfung der Verpackung und/oder Bedienungsanleitung mit beispielsweise Seiten der Marke auf sozialen Netzwerken zu erreichen. Ebenso können weitere digitale Informationen, wie beispielsweise Kaufhinweise für zusätzliche passende Produkte abgerufen werden.

Die Faktoren der sinnvollen Kombination aus Haptik und Digital führen zu einer hohen Wirkungskraft der erfindungsgemäßen Vorrichtung 100 als Lernmittel. Sehr effektiv ist dies vor allem für Anleitungen und jegliche Art an Weiterbildungsmaterial.

Ebenso kann die Technologie sinnvoll in eine Varietät an unterschiedlichen weiteren Anwendungen wie beispielsweise Brettspiele eingebaut werden, um dem Nutzer interaktive und spannende Elemente zu bieten.

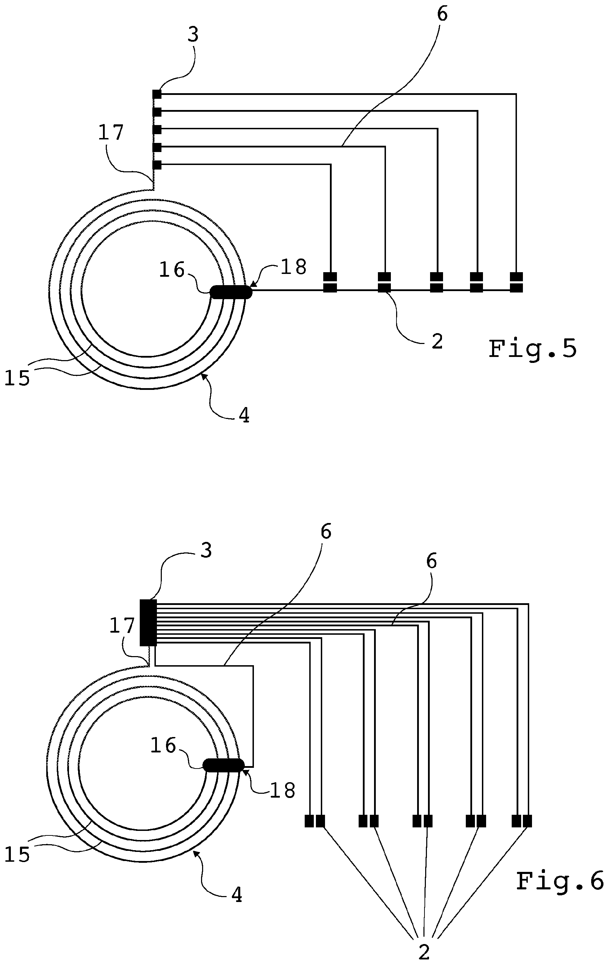

**Fig. 5** und **Fig. 6** zeigen jeweils eine mögliche Verschaltung der in **Fig. 3** und **Fig. 4** dargestellten Vorrichtungen 100. **Fig. 5** zeigt dabei eine NFC-Antenne 4, welche mit fünf parallel geschalteten Schaltern 2 verbunden ist. Den Schaltern 2 ist jeweils zumindest ein NFC-Chip 3 zugeordnet, wobei die Schalter 2 und die ihnen zugeordneten NFC-Chips 3 jeweils miteinander in Serie geschaltet sind. Die so erstellten einzelne Serienschaltungen, umfassend jeweils einen der Schalter 2 und den ihm zugeordneten NFC-Chip 3, sind dabei jeweils an die NFC-Antenne 4 angeschlossen. Die Verbindung zwischen den Schaltern 2, den NFC-Chips 3 und der NFC-Antenne 4 ist dabei jeweils über Leiterbahnen 6 hergestellt.

Die NFC-Antenne 4 weist dabei einen Innenanschluss 16 und einen Außenanschluss 17 auf und umfasst Windungen 15. Weiters ist eine Überbrückung 18 vorgesehen, die mit dem Innenanschluss 16 elektrisch leitend verbunden ist und isoliert von den Windungen 15 in den Bereich außerhalb der NFC-Antenne 4 geführt ist. Zur Isolierung der Überbrückung 18 ist zwischen den Windungen 15 der NFC-Antenne 4 und der Überbrückung 18 eine Schicht an elektrisch isolierendem Material wie beispielsweise elektrisch isolierender Klebstoff angeordnet.

Dabei wird die NFC-Antenne 4 auf der vom Benutzer im Betriebszustand abgewandten Seite der Vorrichtung 100 hinter der Markierung 22 für das NFC-fähige Datenkommunikationsgerät 60 angeordnet, während die Schalter 2 hinter den Markierungen 21 angeordnet sind.

Wird ein NFC-fähiges Datenkommunikationsgerät 60, beispielsweise ein NFC-fähiges Mobiltelefon, auf der Markierung 22 platziert, wird über die NFC-Antenne 4 elektrische Energie übertragen und bei Betätigen eines Schalters 2 an den ihm zugeordneten NFC-Chip 3 weitergeleitet. Die NFC-Chips 3 übertragen bei Betätigung die auf ihnen gespeicherte Information bzw. hinterlegten Befehle beispielsweise durch Lastmodulation über die NFC-Antenne 4 an das NFC-fähige Datenkommunikationsgerät 60. Diese Informationen können dann auf dem NFC-fähigen Datenkommunikationsgerät 60 angezeigt bzw. ausgeführt werden.

Die Windungen 15 der NFC-Antenne 4 und die Leiterbahnen 6 können grundsätzlich bei allen Ausführungsformen der Erfindung in einem Druckprozess auf die Vorrichtung 100 aufgedruckt werden. Die Windungen 15 der NFC-Antenne 4 und die Leiterbahnen 6 können dazu aus einem dünn aufgetragenen, elektrisch leitfähigen Material wie beispielsweise Silberleitlack, Aluminium, Kupfer oder einem leitenden Polymer bestehen bzw. dieses Material umfassen.

Bei der in **Fig. 6** dargestellten Kombination aus einer NFC-Antenne 4 mit Schaltern 2 ist im Gegensatz zum Beispiel in **Fig. 5** nur ein gemeinsamer NFC-Chip 3 vorgesehen. Der NFC-Chip 3 ist wie in **Fig. 5** über den Außenanschluss 17 mit der NFC-Antenne 4 verbunden und über Leiterbahnen 6 jeweils mit einem von fünf Schaltern 2 verbunden. Der NFC-Chip 3 wird wiederum über die NFC-Antenne 4 mit Spannung versorgt.

Im NFC-Chip 3 sind dabei Transistoren vorgesehen, welche kapazitiv reagieren, sodass, wenn einer der Schalter 2 geschlossen ist, das gewünschte Signal zurück an die NFC-Antenne 4 übertragen und vom NFC-fähigen Datenkommunikationsgerät 60 empfangen wird. Dabei ist, je nachdem welcher der Schalter 2 geschlossen ist, die jeweilige Information bzw. der jeweilige Befehl vom zugeordneten NFC-Chip 3 abrufbar.

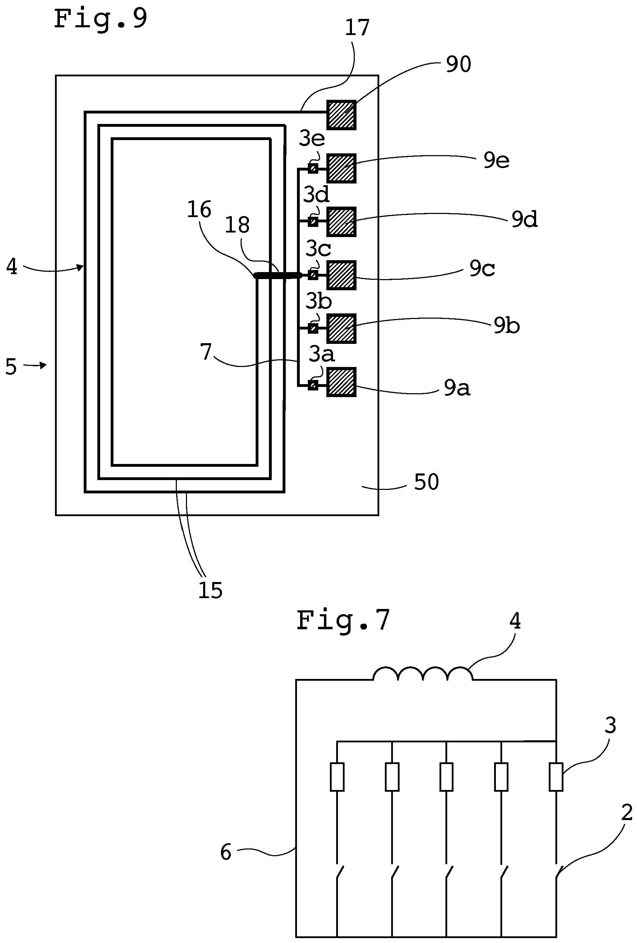

**Fig. 7** zeigt den schematischen Aufbau einer ersten Ausführungsform der Erfindung. Die NFC-Antenne 4 ist über Leiterbahnen 6 mit den NFC-Chips 3 und den Schaltern 2 verbunden und die NFC-Chips 3 sowie die Schalter 2 sind jeweils in Serie geschaltet. Dadurch ist ein Stromkreis ausgebildet ist, der durch Betätigen eines der Schalters 2 schließbar bzw. wieder unterbrechbar ist.

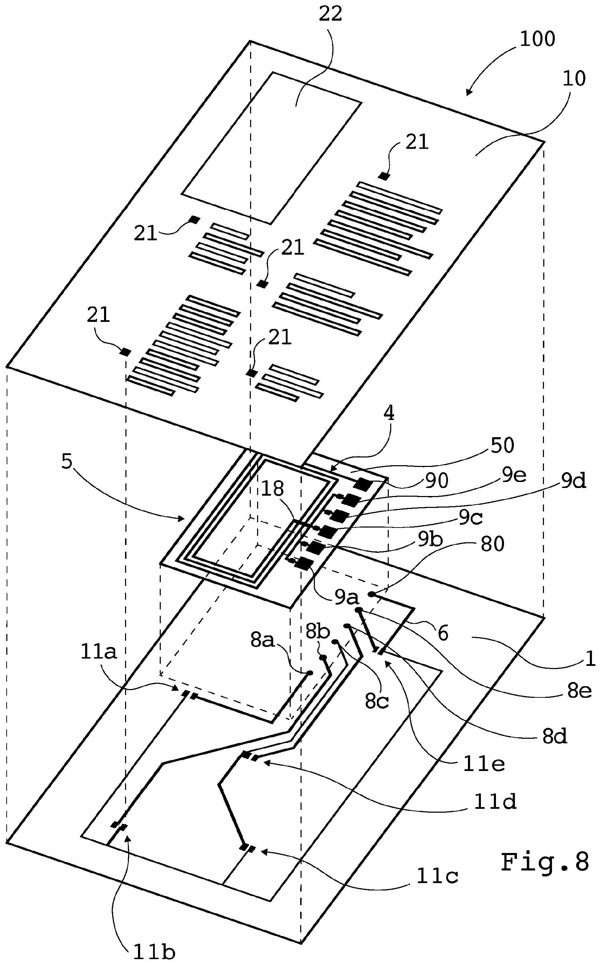

**Fig. 8** **und** **Fig. 9** zeigen den Aufbau einer ersten bevorzugten Ausführungsform der Erfindung, bei der ein Etikett 5 verwendet wird, auf dem NFC-Chips 3a, ... 3e sowie eine NFC-Antenne 4 angebracht sind. Die NFC-Antenne 4 ist auf dem Etikett 5, insbesondere ausgestanzt, geätzt oder aufgedruckt, ausgebildet und weist eine Mehrzahl von Windungen 15 sowie einen Innenanschluss 16 und einen Außenanschluss 17 auf. Weiters ist eine Überbrückung 18 vorgesehen, die mit dem Innenanschluss 16 elektrisch leitend verbunden und isoliert von den Windungen 15 in den Bereich außerhalb der NFC-Antenne 4 geführt ist.

Jeweils einer der Anschlüsse jedes der auf dem Etikett 5 befindlichen NFC-Chips 3a, ..., 3e ist mit jeweils einer Kontaktstelle 9a,... , 9e elektrisch leitend verbunden und der jeweils andere Anschluss jedes der NFC-Chips 3a, ..., 3e ist über die Überbrückung 18 mit dem Innenanschluss 16 der NFC-Antenne 4 elektrisch leitend verbunden.

Der Außenanschluss 17 der NFC-Antenne 4 ist an eine auf dem Etikett 5 angeordnete weitere Kontaktstelle 90 über eine Leiterbahn 7 elektrisch leitend angeschlossen, und jede der etikettenseitigen Kontaktstellen 9a, ..., 9b ist über eine auf dem Träger 1 verlaufende Leiterbahn 6 mit dem Außenanschluss 17 über die weitere etikettenseitige Kontaktstelle 90 elektrisch leitend verbunden. Dabei ist in jeder dieser Leiterbahnen 6 jeweils ein im Ausgangszustand unterbrochener Schalter 2a, ..., 2e angeordnet, welcher sich aus den Schalterelementen 11, 12 zusammensetzt.

Die Vorrichtung 100 umfasst einen Träger 1 und einen weiteren Träger 10, zwischen denen die fünf Schalter 2a, ... 2e angeordnet sind. Die Schalter 2a, ... 2e sind jeweils über Leiterbahnen 6 mit trägerseitigen Kontaktstellen 8a, ... 8e, 80 verbunden, wobei im vorliegenden Fall die trägerseitigen Kontaktstellen 8a, ... 8e, 80 und die Leiterbahnen 6 materialeinheitlich sind. Auf dem Träger 1 ist ein Etikett 5 mit einem folienförmigen Grundkörper 50 angeordnet, wobei das Etikett 5 mit dem Träger 1 flächig in Verbindung steht.

Im Vergleich zu herkömmlichen NFC-Vorrichtungen bietet die erfindungsgemäße Vorrichtung 100, zur Einbindung mehrerer aufzurufender Links in ein Print-Medium, ökologische und wirtschaftliche Vorteile, da durch die Etiketten (5, 5') in Verbindung mit gedruckten Leiterbahnen in der Produktion sowohl weniger Materialien, als auch weniger Aufspende-Einheiten, benötigt werden.

Für die Produktion erweist sich zudem als besonders vorteilhaft, dass weniger NFC-Komponenten von externen Herstellern zugekauft werden müssen. Pro Vorrichtung muss ein Produzent eines Druckerzeugnisses für eine Mehrzahl an zur Verfügung stehenden NFC-Chips nur ein Etikett nutzen, wobei bei den bisher aus dem Stand der Technik bekannten Varianten jeder nutzbare Chip einen weiteren zu kaufenden NFC-Tag benötigt hat. Durch die erfindungsgemäße Vorrichtung 100 werden all jene Materialien und Kosten geschont, welche bisher durch das Anbringen jedes weiteren NFC-Tags angefallen sind.

Auf dem Etikett 5 sind bei der in **Fig. 9** dargestellten ersten Ausführungsform eine NFC-Antenne 4 sowie fünf NFC-Chips 3a, ..., 3e angeordnet. Die NFC-Antenne 4 weist einen Innenanschluss 16 und einen Außenanschluss 17 auf, sowie eine Überbrückung 18. Die NFC-Chips 3a bis 3e sind über Leiterbahnen 7 mit der NFC-Antenne 4 bzw. mit der Überbrückung 18 verbunden. Auf dem Etikett 5 sind weiters Kontaktstellen 9a, ..., 9e, 90 vorgesehen, die über Leiterbahnen 7 mit den NFC-Chips 3a, ..., 3e verbunden sind.

Das Etikett 5 ist auf dem Träger 1 der Vorrichtung 100 derart angeordnet, dass die Schalter 2a, ... 2e auf dem Träger 1 in einem vom Etikett 5 verschiedenen Bereich angebracht sind. Die auf dem Etikett 5 und dem Träger 1 angeordneten Kontaktstellen 8a, ..., 8e, 80, 9a, ..., 9e, 90, sind dabei derart angeordnet, dass sie einander zugewandt sind, und die Leiterbahnen 6, 7 auf dem Etikett 5 und auf dem Träger 1 miteinander elektrisch leitend kontaktieren.

Die Leiterbahnen 6 auf dem Träger 1 sowie die Leiterbahnen 7 auf dem Etikett 5, die miteinander über die Kontaktstellen 8a, ..., 8e, 80, 9a, ..., 9e, 90 elektrisch leitend verbunden sind, bilden somit einen elektrischen Stromkreis, der durch die Schalter 2a, ... 2e schließbar bzw. unterbrechbar ist. Somit ist es für einen Benutzer möglich, durch das Betätigen eines der Schalter 2a, ... 2e ein Signal von dem dem jeweiligen Schalter 2a, ... 2e zugeordneten NFC-Chip 3a, ... 3e an das NFC-fähige Datenkommunikationsgerät 60 zu übertragen.

Die Vorrichtung 100 umfasst einen weiteren Träger 10, auf dem fünf Markierungen 21 angeordnet sind, hinter denen die Schalter 2a, ... 2e auf dem Träger 1 angeordnet sind. Dadurch wird ein Benutzer der Vorrichtung 100 darauf hingewiesen, an welcher Steller ein Schalter 2a, ... 2e zu betätigen ist, um eine gewünschte Information, die auf dem Träger 10 gekennzeichnet ist, abzurufen. Auf dem Träger 10 ist eine weitere Markierung 22 angeordnet, die einem Benutzer der Vorrichtung 100 kennzeichnet, wo ein NFC-fähiges Datenkommunikationsgerät 60 anzuordnen ist, um durch Betätigung der Schalter Informationen auszulesen.

Ganz allgemein können die Träger 1, 10 aus einem flexiblen, biegsamen Material, wie beispielsweise Papier, hergestellt sein, und miteinander verklebt werden. Die Leiterbahnen 6, 7 auf dem Etikett 5 und/oder auf dem Träger 1 sind elektrisch leitfähige Schichten, welche insbesondere mit elektrisch leitfähigem Lack erstellt sind oder aus leitfähigem Lack bestehen. Alternativ können die Leiterbahnen 6, 7 auch aus leitenden Folien, leitenden Tinten oder anderen elektrisch leitfähigen Substanzen hergestellt sein.

Somit ist es möglich, die Leiterbahnen 6 in einem Druckverfahren auf einem Träger 1, 10 aufzubringen, sodass diese besonders dünn ausgebildet sind und für einen Benutzer der Erfindung nicht durch einen Träger 1, 10 hindurch fühlbar sind.

Bei der in **Fig. 8** gezeigten Ausführungsform ist das Etikett 5 über die Kontaktstellen 8a, ..., 8e, 80, 9a, ..., 9e, 90 mit den Leiterbahnen 6, welche auf dem Träger 1 bzw. der ersten Papierschicht aufgebracht sind, verbunden. Durch das Verkleben bzw. Verbinden des Trägers 1 und des Trägers 10 sind für einen Benutzer der Vorrichtung 100 die Leiterbahnen 6, 7 und das Etikett 5 nicht mehr zu sehen.

Legt ein Benutzer ein NFC-fähiges Datenkommunikationsgerät 60, beispielsweise ein Mobiltelefon, auf die Markierung 22 auf dem Träger 10 der Vorrichtung 100, unter der sich das Etikett 5 befindet, und betätigt einen der Schalter 2a, ... 2e manuell, beispielsweise durch Drücken mit dem Finger, so wird der jeweilige Stromkreis geschlossen. Eine NFC-Kommunikation zwischen dem NFC-fähigen Datenkommunikationsgerät 60 und einem der NFC-Chips 3a, ..., 3e, der dem jeweiligen Schalter 2a, ..., 2e zugeordnet ist, wird aufgebaut und es kann beispielsweise ein Link, der auf dem jeweiligen NFC-Chip gespeichert ist, auf dem NFC-fähigen Datenkommunikationsgerät 60 geöffnet werden.

Die einander zugewandt angeordneten Kontaktstellen 8a, ..., 8e, 80, 9a, ..., 9e, 90 auf dem Träger 1 bzw. dem Etikett 5 sind ebenfalls elektrisch leitfähige Schichten, welche insbesondere mit leitfähigem Lack erstellt sind oder aus leitfähigem Lack bestehen. Der leitfähige Lack ist dabei oberflächlich leitend, vorzugsweise nicht oxidierend, ausgebildet und besteht insbesondere aus Silber.

Das Aufbringen der Leiterbahnen 6 als dünne Schichten während des Druckprozesses ermöglicht es, auch sehr dünne Träger 1, 10, wie beispielsweise dünnes Papier, zu verwenden, sodass die elektronischen Komponenten, wie beispielsweise Leiterbahnen 6 oder Kontaktstellen 8a, ..., 8e, 80, für einen Benutzer kaum fühlbar sind. Weiters kann eine derartige erfindungsgemäße Vorrichtung 100 auch über bekannte Druckprozesse hergestellt werden, sodass eine derartige Vorrichtung 100 kostengünstig herstellbar ist. Durch die Verwendung von NFC-Technologie ist die Erfindung weiters ohne externe Stromversorgung, wie beispielsweise Batterien, betreibbar.

Alternativ ist weiters möglich, dass die Vorrichtung 100 nur einen Träger 1 und ein Etikett 5 aufweist, sodass das Etikett 5 und der Träger 1 nicht durch beispielsweise einen weiteren Träger 10 abgedeckt werden. In diesem Fall besteht bevorzugt die Möglichkeit, diejenige Seite der Vorrichtung 100, auf die das Etikett sowie auch die Leiterbahnen aufgebracht sind, nach dem Aufbringen zu überdrucken und für den Benutzer wenig sichtbar zu machen.

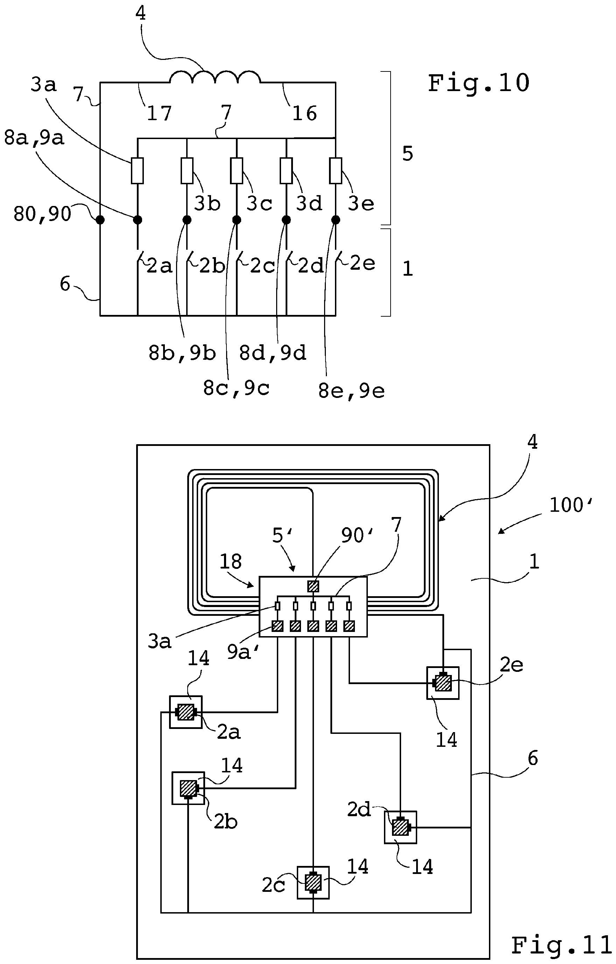

**Fig. 10** zeigt den schematischen Aufbau der in **Fig. 8** dargestellten Ausführungsform der Erfindung. Dabei ist zu erkennen, dass ein geschlossener Stromkreis nur bei Kombination eines Trägers 1 und eines Etiketts 5 herstellbar ist. Dabei sind auf dem Träger 1 Schalter 2a, ..., 2e sowie Leiterbahnen 6 und Kontaktstellen 8a, ..., 8e, 80 angeordnet. Auf dem Etikett 5 sind eine NFC-Antenne 4, NFC-Chips 3a, ..., 3e, Leiterbahnen 7 sowie Kontaktstellen 9a, ..., 9e, 90 angeordnet.

Die NFC-Antenne 4 weist dabei einen Innenanschluss 16 und einen Außenanschluss 17 auf und die NFC-Chips 3a, ..., 3e sowie die Schalter 2a, ..., 2e sind jeweils in Serie geschaltet. Wird ein Etikett 5 auf einem Träger 1 platziert, so bilden die Leiterbahnen 6, 7 einen Stromkreis, welcher durch Betätigen eines der Schalters 2a, ..., 2e schließbar bzw. unterbrechbar ist.

Um einem Benutzer ein manuelles Betätigen eines Schalters 2, 2a, ... 2e, beispielsweise durch Drücken mit einem Finger, zu ermöglichen, kann zumindest einer der Schalter 2, 2a, ... 2e durch zwei einander auf dem Träger 1 und dem Etikett 5 angeordnete Leiterbahnen 6, 7 ausgebildet sein, die einander gegenüberliegen und einander zugewandt sind. Der Schalter 2, 2a, ... 2e weist dabei Schalterelemente 11, 12 auf, wobei zumindest eines der Schalterelemente 11, 12 eine isolierende Oberflächenschicht 110, 120, insbesondere eine Oxidschicht, aufweist.

Die isolierende Oberflächenschicht 110, 120 ist dabei insbesondere derart ausgebildet, dass die Leiterbahnen 6, 7 durch Beaufschlagen eines der Schalterelemente 11, 12 mit einer Kraft normal zur Ausdehnungsebene des Trägers 1 in Kontakt bringbar sind. Die Leiterbahnen 6, 7 sind dabei derart angeordnet, dass zumindest eine isolierende Oberflächenschicht 110, 120 eines der Schalterelemente 11, 12 beim Ausüben einer Kraft normal zur Ausdehnungsebene des Trägers 1 bricht oder reißt.

Optional kann bei einer erfindungsgemäßen Vorrichtung 100 mit derartigen, einfach manuell zu betätigenden Schaltern 2, 2a, ... 2e bei den auf dem Träger 1 verlaufenden Leiterbahnen 6 im Bereich der Schalter 2, 2a, ... 2e eine Unterbrechung 13 vorgesehen sein. Die Unterbrechung 13 unterbricht dabei die Schalter 2, 2a, ... 2e und die Leiterbahnen 6 weisen im Bereich der Schalter 2, 2a, ... 2e Schalterelemente 11 auf. Auf dem den Schalterelementen 11 gegenüberliegenden Bereich des weiteren Trägers 10 sind dabei weitere Schalterelemente 12 angeordnet, die dazu ausgebildet sind, bei Kraftbeaufschlagung normal zur Ausdehnungsebene des Trägers 1, 10 die Unterbrechung 13 zu überbrücken. Dadurch sind die Schalterelemente 11 mit den weiteren Schalterelementen 12 elektrisch leitend verbindbar.

Zumindest einer der Schalterelemente 11, gegebenenfalls beide Schalterelemente 11, 12, sind dabei durch eine Schicht aus oberflächlich leitendem Material, wie beispielsweise oxidiertem Aluminium, ausgebildet und das gegebenenfalls weitere Schalterelement 12 ist mit oberflächlich elektrisch leitfähigem Material, insbesondere Silberleitlack, ausgebildet.

Bei einer zweiten Ausführungsform der Erfindung können die NFC-Antenne 4 und die Leiterbahnen 6 unmittelbar auf dem Träger 1 aufgebracht sein, beispielsweise als Leitlack durch einen Druckvorgang, sodass auf dem Etikett 5' beispielsweise nur NFC-Chips 3a, ..., 3e sowie Kontaktstellen 9a', ..., 9e', 90' und Leiterbahnen 7 angeordnet sind. **Fig. 11** zeigt eine derartige, zweite bevorzugte Ausführungsform der Erfindung mit einem Etikett 5', auf dem die NFC-Chips 3a, ..., 3e aufgebracht sind, wobei eine Überbrückung 18 der spulen- bzw. spiralförmigen NFC-Antenne 4 auch durch das Etikett 5' gewährleistet ist. D. h., dass das Etikett 5 der zweiten Ausführungsform die Funktion der Überbrückung 18 übernimmt.

Bei der in **Fig. 11** gezeigten Ausführungsform umfasst die Vorrichtung 100' einen Träger 1 mit fünf auf dem Träger 1 angeordneten Schaltern 2a, ..., 2e, welche mit Leiterbahnen 6 verbunden sind. Weiters ist auf dem Träger 1 eine NFC-Antenne 4 angeordnet, die vorzugsweise so wie die Leiterbahnen innerhalb desselben Vorgangs direkt auf den Träger 1 gedruckt werden kann. Die Schalter 2a, ..., 2e sind jeweils separat auf weiteren Etiketten 14 angeordnet, wobei die weiteren Etiketten 14 auf dem Träger 1 angeordnet sind. Dies ermöglicht es, dass auch weitere, allenfalls auch bekannte, Schalter 2a, ..., 2e, beispielsweise auch Schnappscheibenschalter in die erfindungsgemäßen Vorrichtungen 100, 100' eingebunden werden können.

Die Vorrichtung 100' kann auch einen weiteren Träger 10 umfassen, sodass die weiteren Etiketten 14 in diesem Fall zwischen dem Träger 1 und dem Träger 10 angeordnet sind. Die Schalter 2a, ..., 2e können jedoch auch auf beliebige andere Weise ausgebildet sein.

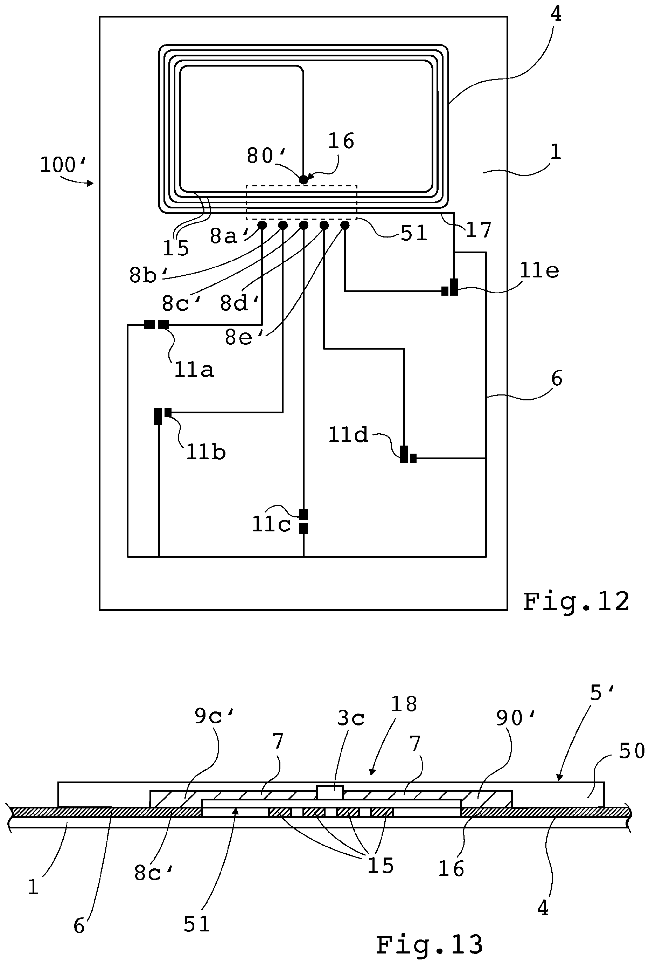

**Fig. 12** zeigt eine Variante eines elektronischen Layouts des Trägers 1 der in **Fig. 11** dargestellten zweiten Ausführungsform der Erfindung ohne das Etikett 5' sowie die weiteren Etiketten 14. **Fig. 12** zeigt dabei die auf dem Träger 1 aufgebrachte NFC-Antenne 4 sowie fünf auf dem Träger 1 aufgebrachte Schalterelemente 11a, ..., 11c für die Schalter 2a, ..., 2e. Die Schalter 2a, ..., 2e werden dabei durch die Kombination aus Schalterlementen 11a, ..., 11c und weiteren Etiketten 14 über Leiterbahnen 6 elektrisch leitend verbunden.

Die NFC-Antenne 4 in **Fig. 12** umfasst weiters einen Innenanschluss 16 und einen Außenanschluss 17, wobei der Außenanschluss 17 mit den Leiterbahnen 6 verbunden ist. Die Schalter 2a, .., 2e sind weiters über Leiterbahnen 6 mit Kontaktstellen 8a', ..., 8e' verbunden, wobei zwischen den Kontaktstellen 8a', ..., 8e' und dem Innenanschluss 16 der NFC-Antenne 4 ein Überbrückungsbereich 51 ausgebildet ist. Die NFC-Antenne 4 ist auf den Träger 1 aufgedruckt ausgebildet und die Windungen 15 sind im Überbrückungsbereich 51 nebeneinander beabstandet, insbesondere parallel verlaufend ausgebildet.

In **Fig. 11** ist weiters ersichtlich, dass das Etikett 5' dem Überbrückungsbereich 51 überragend angeordnet ist und eine Kontaktstelle 90 aufweist, die mit dem Innenanschluss 16 der NFC-Antenne 4 elektrisch leitend kontaktiert ist. Dabei ist jeweils ein Anschluss der auf dem Etikett 5 befindlichen NFC-Chips 3a, ..., 3e elektrisch leitend mit der Kontaktstelle 90 verbunden, was auch in **Fig. 13** im Detail dargestellt ist.

Der jeweils andere Anschluss jedes der auf dem Etikett 5' befindlichen NFC-Chips 3a, ..., 3e ist mit jeweils einer weiteren Kontaktstelle 9a, ..., 9e mit den sich am Träger 1 befindlichen Kontaktstellen 8a', 80', die sich außerhalb der NFC-Antenne 4 befinden, leitend kontaktiert. Jede der weiteren Kontaktstellen 9a, ..., 9e ist über eine auf dem Träger 1 verlaufende Leiterbahn 6 mit dem Außenanschluss 17 der NFC-Antenne 4 elektrisch leitend verbunden. Dabei ist in jeder der Leiterbahnen 6 jeweils ein im Ausgangszustand unterbrochener Schalter 2a, ..., 2e angeordnet.

**Fig. 13** zeigt eine Schnittansicht durch den Überbrückungsbereich 51 der in **Fig. 11** dargestellten zweiten Ausführungsform der Erfindung. Dabei ist ersichtlich, dass das auf dem Träger 1 angeordnete Etikett 5' bzw. der Grundkörper 50 mit dem Träger 1 der Vorrichtung 100' verbunden ist. Die Kontaktstellen 8a', 80' auf dem Träger 1 stehen in elektrisch leitendem Kontakt mit den Kontaktstellen 9a', 90' des Etiketts 5'. Die Kontaktstelle 80' befindet sich dabei am Innenanschluss 16 der NFC-Antenne 4. Der NFC-Chip 3a ist über Leiterbahnen 7 mit der Kontaktstelle 9a', 90' leitend verbunden. Die Windungen 15 der NFC-Antenne 4 sind somit im Überbrückungsbereich 51 durch die Überbrückung 18 elektrisch isoliert.

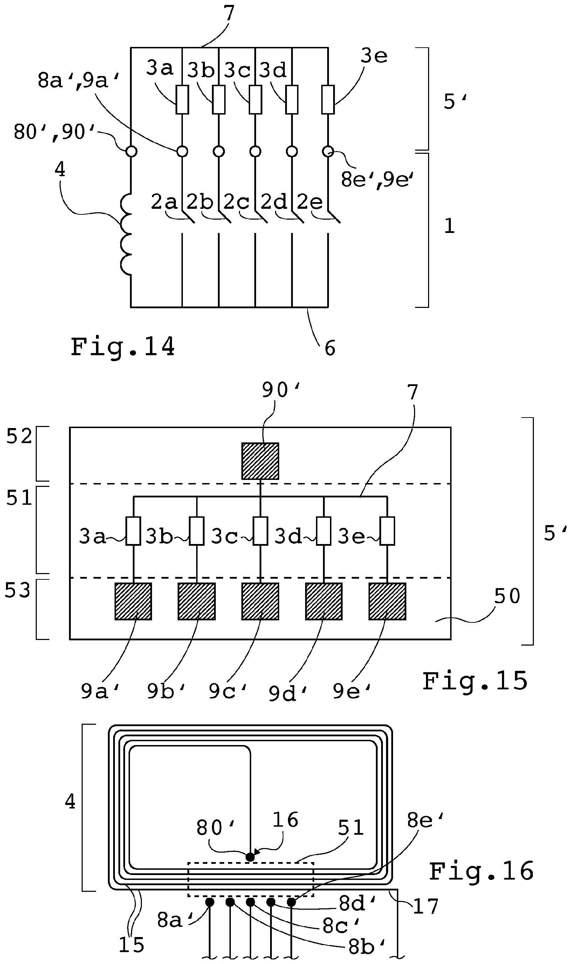

In **Fig. 14** ist schematisch die Schaltung der in **Fig. 11** gezeigten Ausführungsform der Erfindung dargestellt. Dabei ist ersichtlich, dass auf dem Träger 1 die NFC-Antenne 4 sowie die fünf Schalter 2a, ..., 2e angeordnet sind. Der Träger 1 umfasst weiters Kontaktstellen 80', 8a', ..., 8e', wobei die Kontaktstellen 80', 8a', ..., 8e' mit den Schaltern 2a, ..., 2e bzw. der NFC-Antenne 4 über Leiterbahnen 6 elektrisch leitend verbunden sind.

Auf dem Etikett 5' sind fünf NFC-Chips 3a, ..., 3e angeordnet, welche über Leiterbahnen 7 mit Kontaktstellen 90', 9a', ..., 9e' elektrisch leitend verbunden sind. Somit ist durch Anordnen eines Etiketts 5' derart, dass die Kontaktstellen 80', 8a', ..., 8e', auf dem Träger 1 in Kontakt mit den Kontaktstellen 90', 9a', ..., 9e' auf dem Etikett 5' stehen, ein elektrischer Stromkreis herstellbar. Dieser Stromkreis ist durch Betätigen eines Schalters 2a, ..., 2e auf dem Träger 1 schließbar bzw. unterbrechbar.

**Fig. 15** zeigt eine Detailansicht des in **Fig. 11** dargestellten Etiketts 5'. Das Etikett 5' umfasst einen folienförmigen Grundkörper 50, eine Kontaktstelle 90', insbesondere zum Anschluss an den Innenanschluss 16 einer NFC-Antenne 4, sowie eine Anzahl von auf dem Etikett 5' befindlichen NFC-Chips 3a, ..., 3e. Dabei ist jeweils ein Anschluss der NFC-Chips 3a, ..., 3e elektrisch leitend, insbesondere über Leiterbahnen 7, mit der Kontaktstelle 90' verbunden. Das Etikett 5' umfasst weiters eine Anzahl von weiteren Kontaktstellen 9a', ..., 9e', wobei der jeweils andere Anschluss jedes der auf dem Etikett 5' befindlichen NFC-Chips 3a, ..., 3e mit jeweils einer weiteren Kontaktstelle 9a', ..., 9e' elektrisch leitend kontaktiert ist.

Um einen Kurzschluss zwischen den Windungen 15 untereinander sowie einen Kurzschluss der Leiterbahnen 7 auf dem Etikett 5' mit den Windungen 15 zu vermeiden, ist das Etikett 5' in demjenigen Oberflächenbereich, im Folgenden als Überbrückungsbereich 51 bezeichnet, der dem Träger zugewandt ist und die Windungen 15 überbrückt, isolierend ausgebildet. An den Überbrückungsbereich schließen beidseitig zwei Oberflächenbereiche 52, 53 an. Der erste Oberflächenbereich 52 weist eine nach außen hin leitend ausgebildete Kontaktstelle 90' auf, die mit der Kontaktstelle 80' des Trägers elektrisch leitend kontaktiert ist. Der zweite Oberflächenbereich 53 weist eine Anzahl von nach außen hin leitend ausgebildeten Kontaktstellen 9a', ..., 9e' auf, die mit den Kontaktstelle 8a, ..., 8e des Trägers elektrisch leitend kontaktiert sind. Besonders vorteilhaft ist es für die Haftbarkeit des Etiketts 5', wenn alle nicht von den Kontaktstellen 90', 9a', ..., 9e' erfassten Oberflächenbereiche, mit einer Klebstoffschicht versehen sind.

In einem Oberflächenbereich 52 weist das Etikett 5' einen isolierend ausgebildeten Überbrückungsbereich 51 auf, in dem die Kontaktstelle 90' angeordnet ist und von einem Oberflächenbereich 53, in dem die weiteren Kontaktstellen 9a', ..., 9e' angeordnet sind, abgetrennt ist.

**Fig. 16** zeigt ein Detail des in **Fig. 12** dargestellten Trägers 1 im Bereich der NFC-Antenne 4. Darin ist ersichtlich, dass der Innenanschluss 16 und der Außenanschluss 17 der NFC-Antenne 4 nicht elektrisch miteinander verbunden sind.

Auf dem Träger 1 sind die NFC-Antenne 4 und weiters auch die fünf Schalter 2a, ..., 2e angeordnet, was auch in **Fig. 14** ersichtlich ist. Der Träger 1 umfasst weiters Kontaktstellen 80', 8a', ..., 8e', wobei die Kontaktstellen 80', 8a', ..., 8e' mit den Schaltern 2a, ..., 2e bzw. der NFC-Antenne 4 über Leiterbahnen 6 elektrisch leitend verbunden sind. Die Kontaktstellen 80', 8a', ..., 8e' des Trägers 1 stehen mit den Kontaktstellen 90', 9a', ..., 9e' in elektrisch leitendem Kontakt.

Da dem Etikett 5' fünf NFC-Chips 3a, ..., 3e angeordnet sind, welche über Leiterbahnen 7 mit Kontaktstellen 90', 9a', ..., 9e' elektrisch leitend verbunden sind, ist durch Anordnen eines Etiketts 5' derart, dass die Kontaktstellen 80', 8a', ..., 8e', auf dem Träger 1 in Kontakt mit den Kontaktstellen 90', 9a', ..., 9e' auf dem Etikett 5' stehen, ein elektrischer Stromkreis herstellbar. Dieser Stromkreis ist durch Betätigen eines Schalters 2a, ..., 2e auf dem Träger 1 schließbar bzw. unterbrechbar.

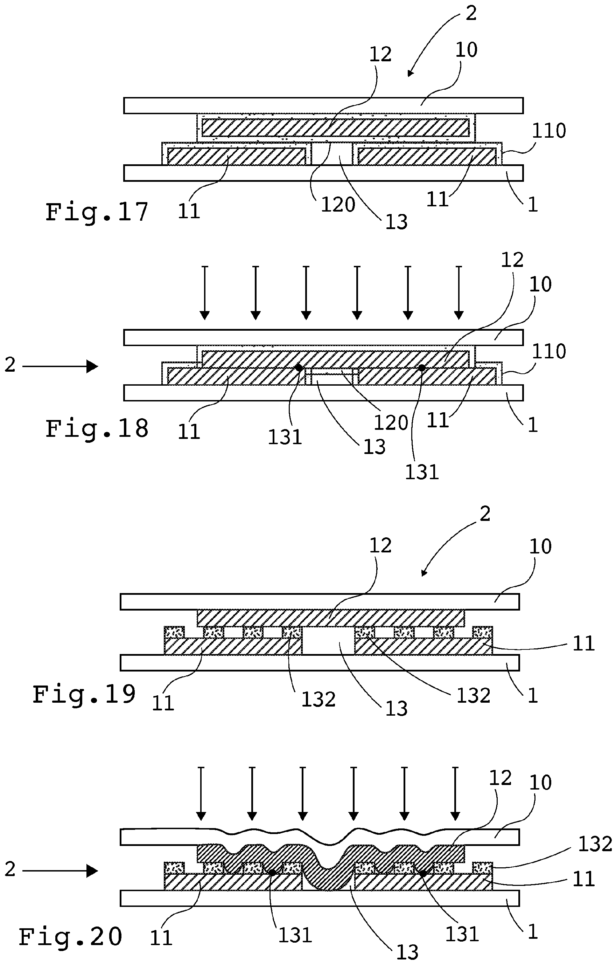

In **Fig. 17 bis Fig. 26** sind mehrere Ausführungsformen von Schaltern 2 dargestellt, welche mit allen Ausführungsformen einer erfindungsgemäßen Vorrichtung 100, 100' kombinierbar sind.

**Fig. 17 und 18** zeigen einen Schalter 2, umfassend zwei Träger 1, 10, sowie ein auf dem Träger 1 befindliches Schalterelement 11, das im Betätigungsbereich des Schalters 2 unterbrochen ist und eine Unterbrechung 13 aufweist. Auf dem dem Schalterelement 11 gegenüberliegenden Bereich des weiteren Trägers 10 ist ein weiteres Schalterelement 12 angeordnet, welches dem Schalterelement 11 gegenüberliegt. Das weitere Schalterelement 12 ist dazu ausgebildet, bei Kraftbeaufschlagung normal zur Ausdehnungsrichtung des Trägers 1, 10 die Unterbrechung 13 in zumindest einem Kontaktpunkt 131 zu überbrücken und derart die durch die Unterbrechung unterbrochenen Teiles des Schalterelements 11 elektrisch leitend zu verbinden.

**Fig. 17** zeigt den Schalter 2 in deaktivierter Stellung, wobei kein Strom über den Schalter 2 fließen kann. Dabei sind die übereinanderliegenden, elektrisch leitfähigen Schalterelemente 11, 12 durch eine isolierende Oberflächenschicht 110, 120, insbesondere aus oberflächlich oxidiertem Aluminium, Aluminiumklebeband oder isolierendem Klebstoff, voneinander elektrisch isoliert angeordnet. Alternativ kann auch nur eines der Schalterelemente 11, 12 eine isolierende Oberflächenschicht 110, 120 aufweisen. Alternativ kann die isolierende Oberflächenschicht 110, 120 auch aus anderen oxidierenden, elektrisch leitfähigen Materialien wie Kupfer oder Silberleitlack bestehen.

**Fig. 18** zeigt den in **Fig. 17** dargestellten Schalter in betätigtem Zustand. Dabei wirkt eine Kraft normal zur Ausdehnungsebene des Trägers 1, 10, wodurch die isolierende Oberflächenschicht 110, 120 im Bereich der Schalterelemente 11, 12 bricht bzw. zerstört ist. Dadurch ist die Unterbrechung 13 in zwei Kontaktpunkten 131 überbrückt und die Teile des Schalterelements 11 sind durch das weitere Schalterelement 12 elektrisch leitend miteinander verbunden. Somit ist ein Stromkreis durch Betätigen eines Schalters 2 schließbar, sodass eine über eine NFC-Antenne 4 induzierte Spannung über den Stromkreis fließen kann.

**Fig. 19** zeigt eine weitere Ausführungsform eines Schalters 2, bei dem, wie beim in **Fig. 17** dargestellten Schalter 2, auf dem Träger 1, 10 ein Schalterelement 11 bzw. ein weiteres Schalterelement 12 einander gegenüberliegend angeordnet sind. Zwischen dem Schalterelement 11 und dem Schalterelement 12 ist ein elektrisch isolierendes Material 132, wie beispielsweise elektrisch isolierender Klebstoff, in einem feinen Raster aufgetragen. Das Auftragen des Rasters des elektrisch isolierenden Materials 132 kann dabei in einem Druckverfahren verwirklicht sein und im Betätigungsbereich des Schalters 2 ist eine Unterbrechung 13 angeordnet. Als isolierendes Material kommt beispielsweise Klebstoff, insbesondere ein in einem Druckverfahren aufgetragener, unter UV-Licht härtender, Klebstoff oder Lack in Betracht.

**Fig. 20** zeigt den in **Fig. 19** dargestellten Schalter 2 in betätigtem Zustand. Bei Aufbringen einer Kraft normal zur Ausdehnungsebene des Trägers 1, 10 passt sich das flexible bzw. biegsame weitere Schalterelement 12 an das in einem Raster aufgebrachte, elektrisch isolierende Material 132 an, sodass zumindest zwei Kontaktpunkte 131 ausgebildet sind, in dem das weitere Schalterelement 12 jeweils einen der beiden Anschlüsse des Schalterelements 11 elektrisch leitend kontaktiert bzw. dessen Unterbrechung 13 überbrückt, sodass Strom über den Schalter 2 fließen kann.

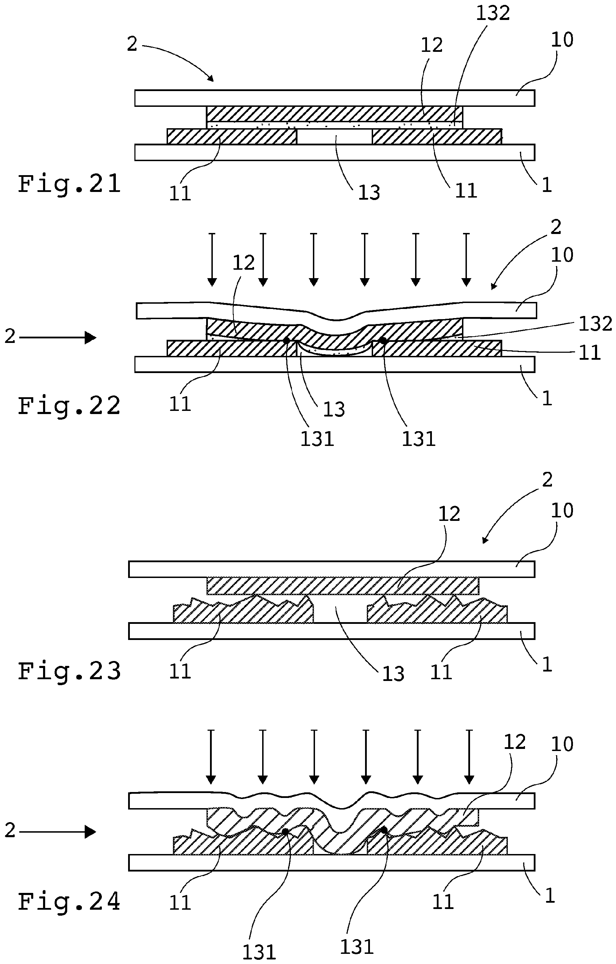

**Fig. 21** zeigt eine weitere Ausführungsform eines Schalters 2. Der Schalter 2 umfasst dabei einen Träger 1, 10 sowie Schalterelemente 11 und ein weiteres Schalterelement 12, wobei der Schalter 2 eine Überbrückung 13 aufweist, die im Betätigungsbereich des Schalters 2 angeordnet ist. Zwischen den Schalterelementen 11 und dem weiteren Schalterelement 12 ist eine Schicht aus elektrisch isolierendem Material 132 angeordnet.

Die Schicht ist dabei durchgehend ausgebildet, sodass sie das weitere Schalterelement 12 vollständig gegenüber den Schalterelementen 11 bzw. der Unterbrechung 13 elektrisch isoliert. Bei der Schicht aus elektrisch isolierendem Material 132 handelt es sich um eine isolierende elastische Klebstoffschicht.

**Fig. 22** zeigt den in **Fig. 21** dargestellten Schalter 2 in betätigtem Zustand. Beim Ausüben einer Kraft normal zur Ausdehnungsebene des Trägers 1, 10 wird die Schicht aus elektrisch isolierendem Material 132 verformt bzw. verdrängt. Dadurch werden zumindest zwei Kontaktpunkte 131 ausgebildet, in dem die Schalterelemente 11 das weitere Schalterelement 12 elektrisch leitend kontaktiert, sodass Strom über den Schalter 2 fließen kann.

Nach Ende der Druckbeaufschlagung stellt sich ursprüngliche Form die Schicht aus elektrisch isolierendem Material 132 wieder ein und der Schalter 2 ist nicht durchgehend aktiviert. Besonders geeignet zur Ausbildung eines derartigen Schalters 2 ist eine Kombination von Silberleitlack zur Ausbildung der Schalterelemente 11, 12 in Kombination mit einer Schicht aus elastischem Klebstoff als elektrisch isolierendes Material 132.

**Fig. 23** zeigt eine weitere Ausführungsform eines Schalters 2. Der Schalter 2 umfasst einen Träger 1 mit einem Schalterelement 11 mit zwei Bereichen, die durch eine Unterbrechung 13 getrennt sind und die an der dem weiteren Träger 10 zugewandten Seite ein Relief aufweisen. Auf dem weiteren Träger 10 ist ein weiteres Schalterelement 12 angeordnet, der die Schalterelemente 11 des Trägers 1 punktweise entlang des Reliefs kontaktiert. Durch den nur punktweise bestehenden Kontakt zwischen den Schalterelementen 11 und dem weiteren Schalterelement 12 ist ein ausreichend hoher Widerstand gewährleistet, sodass kein Strom über den Schalter 2 fließen kann und der NFC-Chip 3 nicht über eine NFC-Antenne 4 mit Energie versorgt wird.

**Fig. 24** zeigt den in **Fig. 23** dargestellten Schalter 2 in betätigtem Zustand. Durch Ausüben einer Kraft normal auf die Ausdehnungsebene des Trägers 1 bzw. 10 verformt sich das weitere Schalterelement 12 und passt sich an das Relief des Schalterelements 11 des Trägers 1 an. Dadurch wird zumindest in zwei Kontaktpunkten 131 die Unterbrechung 13 überbrückt und die Schalterelemente 11 und die weiteren Schalterelemente 12 elektrisch leitend verbunden, sodass über den Schalter 2 Strom fließen kann.

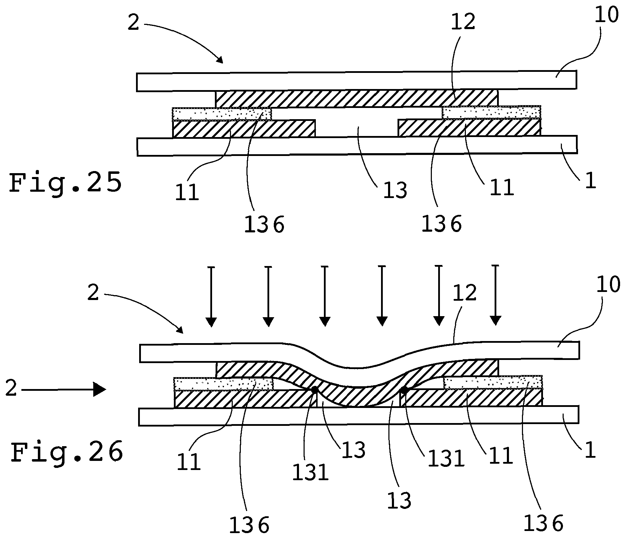

**Fig. 25** zeigt eine weitere Ausführungsform eines Schalters 2. Der Schalter 2 umfasst dabei einen Träger 1, 10 sowie Schalterelemente 11 und ein weiteres Schalterelement 12, wobei der Schalter 2 eine Überbrückung 13 aufweist, die im Betätigungsbereich des Schalters 2 angeordnet ist. Zwischen dem Schalterelement 11 und dem weiteren Schalterelement 12 ist konkret eine Schicht aus elektrisch isolierendem Klebstoff 136 angeordnet.

Die Schicht ist dabei durchgehend ausgebildet, sodass sie das weitere Schalterelement 12 vollständig gegenüber dem Schalterelement 11 bzw. der Unterbrechung 13 elektrisch isoliert. Bei der Schicht aus elektrisch isolierendem Klebstoff 132 kann es sich beispielsweise um einen isolierenden Klebstoff handeln.

**Fig. 26** zeigt den in **Fig. 25** dargestellten Schalter 2 in betätigtem Zustand. Bei Ausüben einer Kraft normal zur Ausdehnungsebene des Trägers 1, 10 wird die Schicht aus elektrisch isolierendem Material 132 verformt bzw. verdrängt. Dadurch wird zumindest ein Kontaktpunkt 131 ausgebildet, in dem das Schalterelement 11 das weitere Schalterelement 12 elektrisch leitend kontaktiert, sodass Strom über den Schalter 2 fließen kann.

Nach Ende der Druckbeaufschlagung stellt sich ursprüngliche Form die Schicht aus elektrisch isolierendem Material 132, wie beispielsweise Klebstoff, wieder ein und der Schalter 2 ist nicht durchgehend aktiviert. Besonders geeignet zur Ausbildung eines derartigen Schalters 2 ist eine Kombination von Silberleitlack zur Ausbildung der Schalterelemente 11, 12 in Kombination mit einer Schicht aus Aluminium als elektrisch isolierendem Material 132.

Optional kann bei allen dargestellten Schaltern im Bereich um den Schalter 2 ein Abstandshalter auf einem Träger 1, 10 angeordnet sein, sodass bei unbeabsichtigtem Aufbringen von geringem Druck auf den Schalter 2 beispielsweise beim Stapeln von Vorrichtungen 100, 100' der Schalter 2 nicht unerwünschterweise geschlossen wird.

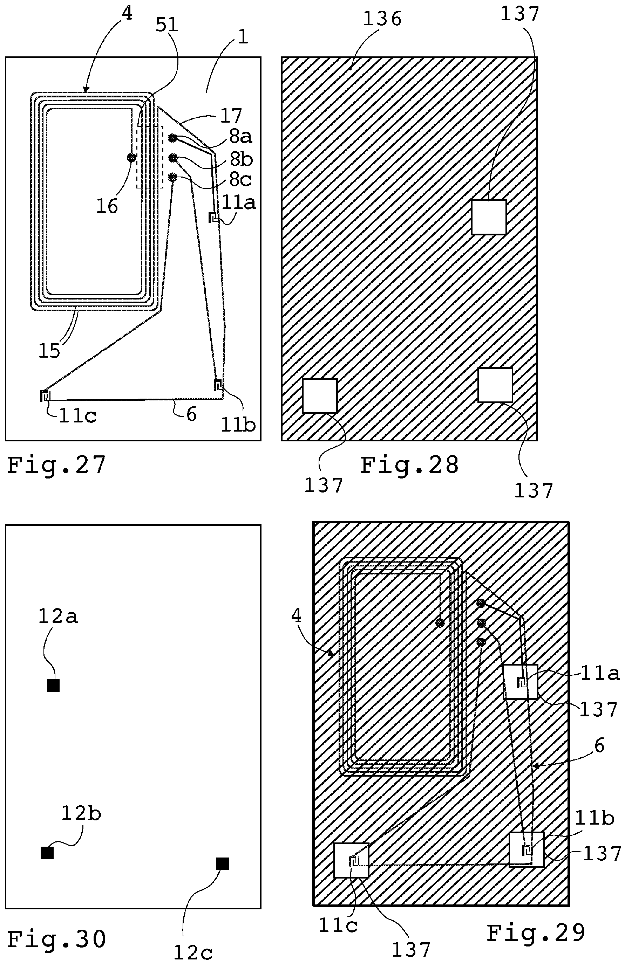

Bei allen dargestellten Schaltern 2 besteht die Möglichkeit, dass die Träger 1, 10 miteinander verklebt sind. Im Bereich der Schalterelemente 11, 12 kann zur Vermeidung unbeabsichtigten Ansprechens der Schalter bzw. zur Verhinderung einer vollständigen durch die Verklebung bedingten Isolation der beiden Schalterelemente 11, 12 voneinander vorgesehen sein, dass derjenige Bereich des Trägers 1 und/oder des weiteren Trägers 10 im Bereich der oder innerhalb einer Umgebung 137 um die Schalterelemente 11, 12 von Klebstoff freigestellt ist. Eine mögliche Variante, die eine solche Freistellung zeigt, ist in den **Fig. 27 bis Fig. 30** dargestellt.

Wird ein Schalter 2 mit einer Kombination aus Leitlack und anderem leitbaren Material ausgebildet, wird in der industriellen Produktion eines solchen Schalters vorteilhafterweise ein als Abstandhalter dienender Klebstoff oder Lack, der beispielsweise durch UV-Bestrahlung ausgehärtet wird und anschließend nicht mehr verformbar ist, verwendet. Ein solches Material eignet sich auch besonders für die Ausbildung von Abstandhaltern für Schalter, da das Volumen während der Aushärtung annähernd gleich bleibt.

Insbesondere kann derart sichergestellt werden, dass der betreffende Schalter nicht durchgehend leitfähig bzw. aktiviert ist bzw. dass eine Leitfähigkeit nur dann gegeben ist, wenn der Schalter auch tatsächlich gedrückt wird.

Dies kann insbesondere erreicht werden, indem ein herkömmlicher Klebstoff aufgetragen wird, jedoch um die Stellen der Schalter herum ein Bereich frei von jeglichem Kleber bleibt. Dies führt dazu, dass zwischen den beiden Schalterelementen 11, 12 ein gewisser Freiraum bleibt. Selbst nach hohem Druckauftrag gehen die beiden Schichten wieder auseinander und der Schalter ist somit funktionsfähig und nicht durchgehend aktiv.

Der Träger 1 und der weitere Träger 10 sind dabei miteinander verklebt und derjenige Bereich des Trägers 1 bzw. des weiteren Trägers 10 innerhalb einer Umgebung 137 **(****Fig. 28****)** um die Schalterelemente 11, 12 ist von Klebstoff freigestellt.

Optional besteht auch die Möglichkeit, dass im Bereich rund um den Schalter 2 ein zusätzlicher Abstandhalter eingefügt wird, der den Schalter 2 zumindest teilweise umgibt. Ein solcher Abstandhalter ist gerade dann sinnvoll und vorteilhaft, wenn, wie dies beim Stapeln von Zeitschriften im Rahmen des Transports der Fall ist, die einzelnen Seiten mit hohen Drücken beaufschlagt werden. Der zusätzliche Abstandhalter um den Schalter 2 herum gewährleistet, dass die Papierschichten im weiterhin Schalterbereich beabstandet bleiben.

Besonders vorteilhaft sind hierfür Materialien, die in einem Druckprozess auftragbar sind, wie beispielsweise Klebstoff, insbesondere UV-härtender Kleber, oder Lacke, insbesondere Relieflack. Der verwendete Abstandhalter kann in einem Raster aufgetragen werden, sodass die leitfähigen Materialien nur bei gewollter und gezielter Druckbeaufschlagung in elektrisch leitenden Kontakt bringbar sind und ein Schalter 2 ausgelöst wird. Lässt der Druck nach, so geht der Schalter erneut in den deaktivierten Zustand über.

Die erfindungsgemäße Vorrichtung 100 kann mit besonders dünnem Papier umgesetzt werden, beispielsweise mit zwei 40 Gramm Papierschichten, indem auf das Papier für ansonsten weiß-bleibende Stellen eine Grundierung aufgetragen wird, damit die elektronischen Komponenten und der Leitlack nicht durchscheinen. Zudem kann man mit den technischen Komponenten im Etikett 5, 5' und den Leiterbahnen 6,7 ebenfalls eine äußerst geringe Schichtdicke erreichen, die gegebenenfalls unter 0,1 Millimeter liegt.

Mit dieser Verfahrenstechnik erweist sich die erfindungsgemäße Vorrichtung als besonders robust und langlebig. Dies wird durch die Verwendung von flexiblen Materialien und kleinsten technischen Elementen erreicht. Die verwendeten NFC-Chips 3 können beispielsweise mit einer Dicke geringer als 70 Mikrometer hergestellt werden. Das Aufeinanderkleben verbindet die beiden Schichten so miteinander, dass selbst durch starkes Biegen, wie auch leichtes Falten, die Funktion vorhanden hält.

Alternativ können bei allen Ausführungsformen einer erfindungsgemäßen Vorrichtung 100, 100' als Schalter 2 auch andere bekannte flächige Schalter verwendet werden, wie vorzugsweise auch Schnappscheiben aus Edelstahl. Die Schnappscheibe ist dabei, insbesondere auf einem Etikett, auf einem Träger 1 mit Leiterbahnen 6 angeordnet und dient dabei als Tastschalter, der in seinem Ausgangszustand geöffnet ist, sodass kein elektrischer Strom über den Schalter 2 fließt. Durch Drücken der Schnappscheibe wird ein elektrischer Kontakt zwischen der Schnappscheibe und einer Leiterbahn 6 hergestellt, sodass ein geschlossener Stromkreis ausgebildet ist. Ein weiterer Träger 10 kann über der Schnappscheibe angeordnet sein und diese abdecken, sodass sie für einen Benutzer einer Vorrichtung 100, 100' nicht sichtbar ist.

Ist durch Betätigen eines Schalters 2 ein elektrischer Stromkreis bei einer der bereits dargestellten Ausführungsformen der Erfindung hergestellt, wird bei einer Anordnung, umfassend eine Vorrichtung 100, 100' sowie ein NFC-fähiges Datenkommunikationsgerät 60, das über die NFC-Antenne 4 mit einem der NFC-Chips 3 in Datenkommunikationsverbindung steht, eine elektrische Spannung in der NFC-Antenne 4 induziert.

Der dem jeweiligen Schalter 2 zugeordnete NFC-Chip 3 wird über die NFC-Reader-Antenne 61 vom NFC-fähigen Datenkommunikationsgerät mit elektrischer Energie versorgt und übermittelt die in ihm gespeicherten Informationen mittels eines vorgegebenen Protokolls an das NFC-fähige Datenkommunikationsgerät 60. Das NFC-fähige Datenkommunikationsgerät 60 verarbeitet die bei ihm ankommenden Informationen und führt die darin enthaltenen Befehle aus oder zeigt die darin enthaltene Information an. So ist beispielsweise ein Link zu einer Internetseite mit dem NFC-fähigen Datenkommunikationsgerät 60 durch Drücken eines Schalters 2 auf der erfindungsgemäßen Vorrichtung 100, 100' aufrufbar.

Je nach verwendetem NFC-Chip 3 kann bei einer erfindungsgemäßen Vorrichtung 100, 100' die Schnelligkeit um Befehle zu übertragen bzw. die Speicherkapazität oder auch die Möglichkeit, nicht nur gespeicherte Befehle zu übertragen, sondern auch Information aktiv auf dem NFC-Chip 3 zu speichern, gewährleistet sein. Die Kontakte des NFC-Chips 3 werden dabei beispielsweise mit einem leitfähigen Klebstoff an den Leiterbahnen 7 kontaktierend angebracht.

Die auszuführenden Befehle bzw. die anzuzeigenden Informationen werden dabei nach dem Aufbringen auf das Etikett, insbesondere vor Anbringen des Etiketts auf dem Träger 1 gespeichert. Alternativ kann auch nach dem Anbringen des NFC-Chips 3 auf der erfindungsgemäßen Vorrichtung 100, Information auf dem NCF-Chip 3 hinterlegt werden. Die hinterlegten Befehle können dabei beispielsweise Internetseiten auf einem NFC-fähigen Datenkommunikationsgerät 60 öffnen oder Befehle in auf dem NFC-fähigen Datenkommunikationsgerät 60 hinterlegten Applikationen ausführen.

In weiterer Folge wird ein Beispiel zur Herstellung eines Trägers 1, 10 einer erfindungsgemäßen Vorrichtung 100 näher gezeigt. Zunächst wird die Position eines Datenkommunikationsgeräts 60 in Bezug auf den Träger 1 festgelegt und davon abhängig die Position der NFC-Antenne 4 gegenüber dem Träger 1 bestimmt.

Anschließend wird die Position von Schalter 2, 2a, ..., 2c in Bezug auf den Träger 1 festgelegt und auf dem NFC-fähigen Datenkommunikationsgerät 60 auszuführende Steuerbefehle oder Links zu den einzelnen Schalter 2, 2a, ..., 2c zugeordnet. Weiters wird die Position des Etiketts 5, 5' und der Leiterbahnen 6 in Bezug auf die festgelegten Positionen des Datenkommunikationsgeräts 60 und der Schalter 2; 2a, .., 2c festgelegt, sodass ein geschlossener Stromkreis durch Aufbringen des Etiketts 5, 5' herstellbar ist.

Optional kann ein Druckbild und ein Druckformat für den zur Herstellung der erfindungsgemäßen Vorrichtung 100, 100' verwendeten Träger 1 ausgewählt werden. Der Träger 1 wird in diesem Fall mit dem dafür vorgesehenen Druckbild bzw. der dafür vorgesehenen Graphik vorzugsweise auf seiner den Leiterbahnen 6 gegenüberliegenden Seite bedruckt.

Nach dem Festlegen der Position des Etiketts 5, 5' und gegebenenfalls dem Bedrucken des Trägers 1 werden die Leiterbahnen 6 auf den Träger 1 aufgebracht. Darauf folgend werden die Schalter 2, 2a, ..., 2c oder Schalterelemente 11 auf dem Träger 1 positioniert oder auf dem Träger 1 erstellt, beispielsweise durch Aufdrucken auf der den Leiterbahnen 6 zugewandten Seite des Trägers 1, .

Die einem Schalter 2, 2a, ..., 2c zugeordneten NFC-Chips 3 werden mit den zu übermittelnden Steuerbefehlen oder Links programmiert und anschließend wird das Etikett 5, 5' auf den Träger 1 aufgebracht und die Kontaktstellen 80, 8a, ..., 8e, 80', 8a', ..., 8e' auf dem Träger 1 mit den Kontaktstellen 90, 9a, ..., 9e, 90', 9a', ..., 9e' des Etiketts 5, 5' kontaktiert.

Optional kann bei einem Verfahren zur Herstellung einer erfindungsgemäßen Vorrichtung 100, 100' auch ein weiterer Träger 10 bereitgestellt werden, welcher dem Träger 1 gegenüberliegend angeordnet wird.

Optional kann dabei für den weiteren Träger 10 ein Druckbild für die vom Träger 1 abgewandte Seite des weiteren Trägers 10 ausgewählt werden. Dabei wird das Druckformat des weiteren Trägers 10 entsprechend dem Druckformat des Trägers 1 festgelegt und der weitere Träger 10 entsprechend dem vorgegebenen Druckbild mit beispielsweise Text oder Graphiken bedruckt.

Gegebenenfalls werden weitere Schalterelemente 12 auf dem weiteren Träger 10 im Bereich der Schalter 2, 2a, ..., 2c auf derjenigen Seite des weiteren Trägers 10, die den Leiterbahnen 6 des Trägers 1 zugewandt ist, ausgebildet (**Fig. 30**).

Anschließend werden die einander jeweils zugewandten, mit den Schalterelementen 11, 12 versehenen, Seiten des Trägers 1 und des weiteren Trägers 10 zusammengefügt, insbesondere verklebt. Durch das Zusammenfügen des Trägers 1 und des weiteren Trägers 10 ist eine Vorrichtung 100, 100' herstellbar, bei der die Schalterelemente 11, 12 bzw. die Leiterbahnen 6 und das Etikett 5, 5' für einen Nutzer nicht sichtbar sind. Gegebenenfalls ist die Vorrichtung 100, 100' an ihren dem Nutzer zugewandten Seiten bedruckt, sodass das Interesse der Nutzer für die auf den NFC-Chips 3 gespeicherten Informationen oder Links effektiv geweckt werden kann.

Weiters kann auch ein beidseitig bedruckter Träger 1 hergestellt werden. Dazu wird gegebenenfalls eine Grundierung auf der Seite des Trägers 1, auf der sich die Leiterbahnen 6 befinden, aufgebracht.

Ein weiteres Druckbild wird für diejenige Seite des Trägers 1 der Vorrichtung 100, 100', auf der sich die Leiterbahnen 6 befinden, entsprechend dem Druckformat des Trägers 1, festgelegt. Anschließend wird der Träger 1 an seiner den Leiterbahnen 6 zugewandten Seite mit dem ausgewählten weiteren Druckbild überdruckt. Somit ist auch unter Verwendung eines einzelnen Trägers 1 eine Vorrichtung 100, 100' erstellbar, die an ihren beiden dem Nutzer zugewandten Seiten bedruckt ist. Die Schalter benötigen zur Funktionalität jedoch jene ergänzenden weiteren Schalterelemente 12, die beispielsweise am weiteren Träger 10 ausgebildet werden können und bei solchen Umsetzungen mit nur einem Träger 1 ergänzt werden müssten. Über beispielsweise das Anbringen weiterer Etiketten 14 an den Stellen der Schalterelemente 11 können hier jene weiteren Schalterelemente 12, als auch andere bekannte flächige Schalter, ergänzt werden.

Eine erfindungsgemäße Vorrichtung 100, 100' kann beispielsweise im Druckbereich für als Flyer, Broschüren oder Plakate ausgestaltete Werbungen oder auch Inserate in beispielsweise Zeitschriften verwendet werden. Alternativ können mit einer erfindungsgemäßen Vorrichtung 100, 100' auch beispielsweise Weiterbildungsmaterialien, Handouts, Produktbeilagen, Verpackungen oder auch Speisekarten für einen Benutzer interaktiv benutzbar gestaltet werden.

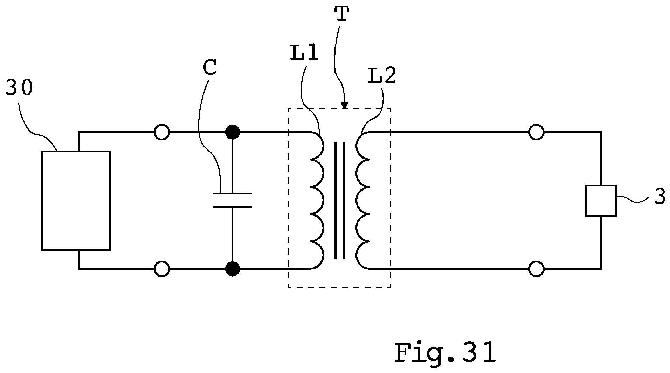

Die Vorbereitung der einzelnen NFC-Chips für den Druckprozess kann auf unterschiedliche Weise erfolgen. Von besonderer Bedeutung ist es, für einige der hier gezeigten Herstellungsverfahren, dass für erfindungsgemäße Vorrichtungen 100' die einzelnen NFC-Chips a priori durch ihr Etikett 5' ohne NFC-Antenne 4 ausgestattet sind, und somit ohne Vorliegen einer NFC-Antenne 4 am Etikett 5' mit den jeweiligen Datensätzen beschrieben werden müssen. Viele NFC-Chips sind jedoch von ihrer Bauart her darauf ausgerichtet, dass ein Beschreiben bzw. Programmieren des im NFC-Chip befindlichen Speichers nur mit angeschlossener, dauerhaft aktiver NFC-Antenne 4 möglich ist. Eine besonders vorteilhafte Methode des Programmierens solcher NFC-Chips ist in **Fig. 31** näher dargestellt.

Um die NFC-Chips 3 des Etiketts 5' flexibel mit den dazugehörigen Datensätzen beschreiben zu können, wird die in Fig. 30 dargestellte Schaltanordnung geschaffen. Zur der Programmierung eines NFC-Chips 3 wird der betreffende NFC-Chip 3 mit seinen beiden Anschlüssen an eine Seite bzw. Spule L₂ eines Transformators T angeschlossen.

An der anderen Seite bzw. Spule L₁ des Transformators T ist eine Programmiereinheit 30 angeschlossen, die dazu ausgebildet ist, einen NFC-Chip 3 unter Verwendung von zwei miteinander gekoppelten Spulen zu programmieren. Anstelle der Verwendung zweier Spulen ist im vorliegenden Fall vorgesehen, parallel zu der Spule L₂ des Transformators T einen Kondensator C vorzusehen, der so dimensioniert wird, dass der an der Programmiereinheit 30 anliegende resultierende LC-Schwingkreis bei 13.56MHz resoniert.

Eine Möglichkeit der Abstimmung des Transformators T und des Kondensators C für die Erreichung der gewünschten Resonanzfrequenz von 13.56MHz kann beispielhaft wie folgt erfolgen: L₁ = L₂ = 6.888 µH; C = 20 pF.

Bei bisher bekannten NFC-Anwendungen wird das NFC-fähige Datenkommunikationsgerät 60 dem jeweiligen aktiven NFC-Tag 70 bzw. der NFC-Antenne 4 jenes Tags 70, wie schematisch in **Fig. 2** gezeigt, entgegengehalten. Bei der in **Fig. 3** dargestellten Anwendung einer erfindungsgemäßen Vorrichtung 100, 100' wird im Gegensatz dazu das NFC-fähige Datenkommunikationsgerät 60 auf die Markierung 22 der Vorrichtung 100, 100' gelegt, um derart durch Betätigen der Schalter 2 der Vorrichtung 100, 100', eine Interaktion mit dem NFC-fähigen Datenkommunikationsgerät 60 zu ermöglichen.

Um hierbei eine einwandfreie und für den Nutzer möglichst einfache Funktionalität beim Platzieren verschiedenster NFC-fähiger Datenkommunikationsgeräte 60 auf der Markierung 22 zu gewährleisten, kommt bei der Vorrichtung 100, 100' eine NFC-Antenne 4 zum Einsatz, deren Größe und Form optimal an die NFC-Reader-Antennen 61 gängiger NFC-fähiger Datenkommunikationsgeräte 60 angepasst sind.

Da bei üblichen NFC-Antennen 4 herkömmlicher NFC-Tags 70 die Spulengröße relativ gering, beispielsweise im Bereich von 38 x 38 mm, gehalten wird, ist es bei der Vielzahl an Positionen, die die NFC-Reader-Antennen 61 in gängigen NFC-fähigen Datenkommunikationsgeräten 60, insbesondere NFC-fähigen Smartphones, einnehmen, schwierig, mit verschiedenen NFC-fähigen Datenkommunikationsgeräten 60 eine NFC-Datenkommunikation herzustellen, sofern vorgesehen ist, dass die Markierung 22 der jeweiligen Vorrichtung 100, 100', auf die das NFC-fähigen Datenkommunikationsgerät 60 jeweils gelegt wird, hinsichtlich Form und Größe einheitlich ist.

Daher wird bei der erfindungsgemäßen Vorrichtung 100, 100' vorteilhafterweise eine NFC-Antenne 4 verwendet, deren Größe und Form bei ähnlichem Positionieren NFC-fähiger Datenkommunikationsgeräte 60, insbesondere NFC-fähiger Smartphones, hinsichtlich der Vorrichtung 100, 100', eine höchstmögliche Anzahl an Positionen von NFC-Reader-Antennen 61 in NFC-fähigen Datenkommunikationsgeräten 60, insbesondere NFC-fähiger Smartphones, flächig abdeckt oder zumindest in einem gewissen Bereich flächig überschneidet, um beim Platzieren verschiedenster NFC-fähiger Datenkommunikationsgeräte 60 auf der Markierung 22 der Vorrichtung 100, 100' eine Kopplung zwischen dem Spannungsfeld, welches von der NFC-Reader-Antenne 61 des NFC-fähigen Datenkommunikationsgeräts 60 ausgeht, und dem Spannungsfeld der sich auf dem Träger 1 oder dem Etikett 5 befindenden NFC-Antenne 4 zu schaffen.

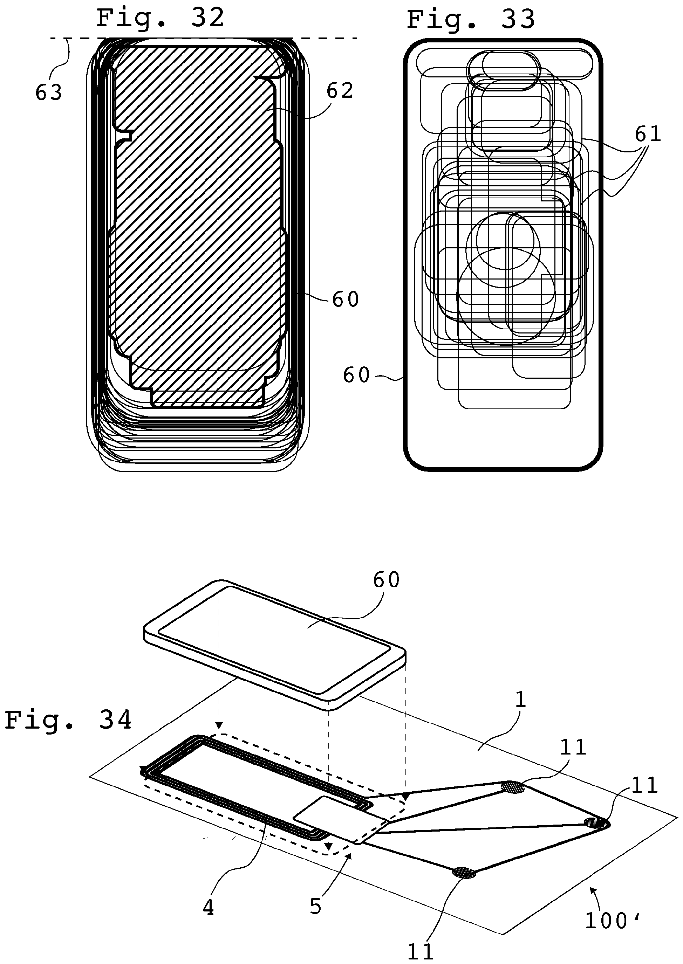

**Fig. 32** zeigt eine Grafik, in der die Umrisse von 37 verschiedenen, gängigen NFC-fähigen Datenkommunikationsgeräten 60, bzw. Smartphones, überlappend dargestellt sind. Ausgerichtet sind diese jeweils zentral an der Oberkante 63 der Markierung 22, da Nutzer aus verhaltenspsychologischen Gründen dazu tendieren, beim Positionieren ihres NFC-fähigen Datenkommunikationsgeräts 60 auf der Vorrichtung 100, 100' es an der Oberkante 63 der Markierung 22 auf der Vorrichtung 100, 100' auszurichten.

Alternativ hierzu können die NFC-fähigen Datenkommunikationsgeräte 60 auch an jeglichen anderen Arten von einheitlich festgelegten Stellen ausgerichtet werden, sofern dies für das Ergebnis zielführend ist. So kann beispielsweise ein Punkt gewählt werden anhand welchem jeweils der Mittelpunkt des entsprechenden NFC-fähigen Datenkommunikationsgeräts 60 ausgerichtet wird.

In den Umrissen gängiger NFC-fähiger Datenkommunikationsgeräte 60 ist jeweils die Position der NFC-Reader-Antenne 61 des jeweiligen NFC-fähigen Datenkommunikationsgeräts 60 markiert (**Fig. 33**). In der Gesamtheit führen diese verschiedensten Platzierungen zu einem Flächenbereich 62 bzw. einem Gesamtschema an Positionen von NFC-Reader-Antennen 61 der NFC-fähigen Datenkommunikationsgeräte 60, welches in **Fig. 32** markiert ist.

Der Flächenbereich 62 besitzt bei den gebräuchlichen, gegenwärtig auf dem Markt verfügbaren NFC-fähigen Datenkommunikationsgeräten 60 ungefähr Außenabmessungen von 70 x 140 mm (**Fig. 32**).

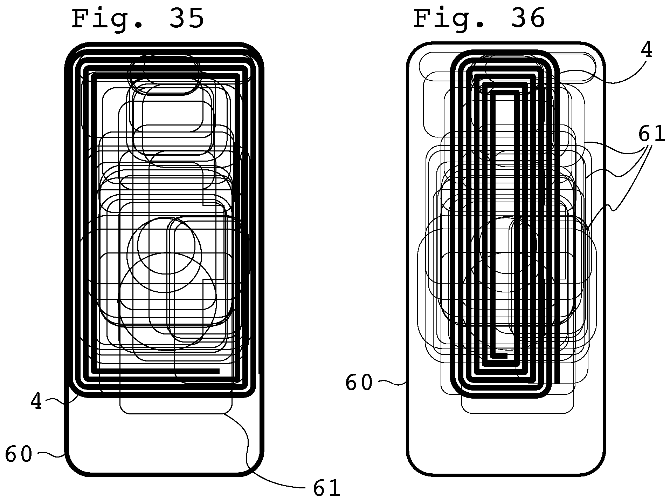

Dieser Ansatz beim Erstellen des NFC-Antennen-Designs führt vorteilhafterweise dazu, dass die Antennengröße und -form, wie beispielsweise bei der in **Fig. 35** dargestellten NFC-Antenne 4, eine Vielfalt an NFC-Reader-Antennen 61 von NFC-fähigen Datenkommunikationsgeräten 60 in einem angemessenen Bereich flächig überdeckt, und somit optimal den Zweck einer möglichst breiten Funktionalität erfüllt.

Der Hauptvorteil einer derart ausgestalteten NFC-Antenne 4 besteht darin, dass der Nutzer sein mobiles NFC-fähiges Datenkommunikationsgerät 60 nicht mehrfach verschieben und verschiedenste Positionen probieren muss, um eine NFC-Kommunikation herzustellen und beispielsweise Links öffnen zu können, wie dies bei den Antennengrößen und -formen von herkömmlichen NFC-Tags 70 der Fall wäre, wenn sie in einer erfindungsgemäßen Vorrichtung 100, 100' genutzt werden würden. Ganz im Gegenteil dazu wird eine einfache und direkte Ausführung der gewünschten Interaktion ermöglicht, da aufgrund der großen flächigen Abdeckung die Wahrscheinlichkeit einer Kopplung der NFC-Reader-Antennen 61 des jeweiligen mobilen Datenkommunikationsgeräts 60 mit der NFC-Antennne 4 der Vorrichtung 100, 100' maximiert wird.

Für die Außenabmessungen der NFC-Antennen 4 empfehlen sich von den gegenwärtig auf dem Markt verfügbaren NFC-fähigen Datenkommunikationsgeräten 60 ausgehend eine Breite von 60 bis 80 mm und eine Höhe von 110 bis 150 mm (**Fig. 35**). Je größer der Umfang der NFC-Antenne 4 innerhalb des angegebenen Rahmens ausgestaltet ist, desto höher ist für den Nutzer die Toleranz für ungenaues Platzieren des NFC-fähigen Datenkommunikationsgeräts 60 im Bezug zur auf der Vorrichtung 100, 100' angebrachten Markierung 22. Jedoch wird mit zunehmender Vergrößerung bzw. Skalierung die Signalstärke der NFC-Antenne 4 immer schwächer.

**Fig. 34** zeigt schematisch eine Umsetzung der erfindungsgemäßen Vorrichtung 100, 100' mit einer derart ausgebildeten NFC-Antenne 4. Der Träger 1 ist hierbei ein Papier im DIN A4 Format 210 x 297 mm und die gedruckte NFC-Antenne 4 hat Außenabmessungen von 74 x 131 mm. Die vier Windungen sind je 2,2 mm breit.

Bei der tatsächlichen Ausgestaltung der NFC-Antenne 4 kann eine einfache und breite Funktionalität gewährleisten werden, wenn die Parameter wie folgt dimensioniert werden: Die Anzahl der Windungen erweist sich als ein besonders signifikantes Leistungsmerkmal der NFC-Antenne 4. sofern sich die Breite der Windungen in einem Bereich geringer als 3 mm befindet, reichen vier Windungen aus, damit der Gesamtwiderstand der NFC-Antenne 4 fünfundzwanzig (25) Ohm nicht signifikant überschreitet, sofern die NFC-Antenne im Siebdruckverfahren mit gängigen siebdruckfähigen Silberleitlacken auf Papier gedruckt wird und den Vorgaben des verwendeten Silberleitlacks entsprechend getrocknet wird. Wird die Windungszahl erhöht, so wird der Empfangsbereich der NFC-Antenne 4 vergrößert. Der Widerstand kann durch höheren sowie breiteren Auftrag des Antennenmaterials, sowie durch Verwendung eines geeigneten Substrats, welches sich als fördernd für die elektrische Leitfähigkeit erweist, verringert werden.

Wird als Trägermaterial Papier genutzt und die NFC-Antenne 4 mit einem elektrisch leitenden Lack gedruckt, beispielsweise mit Silberleitlack, erweisen sich häufig gestrichene Papiere mit möglichst glatter Oberfläche als besonders geeignet. Raue Papiere hingegen tendieren dazu, die aufgetragenen Materialien stärker zu absorbieren, was dazu führt, dass die Leitfähigkeit des Leitlacks durch den Einfluss von Papierfasern gehemmt wird.

Beim Erstellen von NFC-Antennen 4 kann eine Reduzierung von einem der Parameter Schichtdicke bzw. Linienstärke durch eine Erhöhung des jeweils anderen Parameters kompensiert werden, sodass in der Gesamtheit der Materialverbrauch annähernd gleich bleibt.

Außerdem spielt die Windungszahl hinsichtlich der Empfangsstärke der NFC-Antenne 4 in jenem Zusammenspiel der Parameter ebenfalls eine Rolle. So kann beispielsweise die Breite der NFC-Antenne 4 von 60 bis 80 mm auf ungefähr 40 bis 45 mm verringert werden, sofern die NFC-Antenne 4, abhängig vom Ausmaß der Breitenverringerung, um eine fünfte oder sechste Windung nach Innen hin ergänzt wird, um die Größenverringerung mit einer stärkeren Frequenz der NFC-Antenne 4 auszugleichen **(****Fig. 36****).** In diesem Fall **(****Fig. 36****)** werden bei einer Vielzahl von NFC-fähigen Datenkommunikationsgeräten 60 die NFC-Reader-Antennen 61 der NFC-fähigen Datenkommunikationsgeräte 60 nicht mehr vollflächig abgedeckt, sondern lediglich flächig überschnitten, was durch die ergänzten Windungen ebenfalls ausreichend für den Aufbau einer NFC-Kommunikation mit gegenwärtigen NFC-fähigen Datenkommunikationsgeräten 60 ist.

## Patentansprüche

1. Vorrichtung (100, 100'), insbesondere Druckerzeugnis, umfassend
- einen, vorzugsweise flexiblen, Träger (1), insbesondere bestehend aus Papier oder Karton,
- eine Anzahl von auf dem Träger (1) angeordneten in ihrem jeweiligen Ausgangszustand unterbrochenen Schaltern (2; 2a, 2b, ...),
- eine Anzahl von jeweils zumindest einem Schalter zugeordneten NFC-Chips (3; 3a, 3b, ...),
- eine NFC-Antenne (4),
- wobei die Schalter (2; 2a, 2b, ...) und die ihnen zugeordneten NFC-Chips (3; 3a, 3b, ...) miteinander in Serie geschaltet sind und die so erstellten einzelnen Serienschaltungen umfassend jeweils einen Schalter (2; 2a, 2b, ...) und den ihm zugeordneten NFC-Chip (3; 3a, 3b, ...) jeweils an die NFC-Antenne (4) angeschlossen sind,
**dadurch gekennzeichnet, dass**
- die Vorrichtung ein Etikett (5; 5') mit einem folienförmigen Grundkörper (50) umfasst, wobei das Etikett (5; 5') mit dem Träger (1) flächig in Verbindung gebracht ist,
- dass die einzelnen NFC-Chips (3; 3a, 3b, ...) auf dem Etikett (5; 5') angeordnet sind,
- dass die Schalter (2; 2a, 2b, ...) auf dem Träger (1) in einem vom Etikett (5; 5') verschiedenen Bereich angeordnet sind,
- dass zur elektrischen Verbindung der Schalter (2; 2a, 2b, ...), der NFC-Chips (3; 3a, 3b, ...) und der NFC-Antenne (4) auf dem Träger (1), gegebenenfalls auch auf dem Etikett (5; 5'), Leiterbahnen (6, 7) vorgesehen sind, und
- dass auf dem Etikett (5; 5') und auf dem Träger (1) einander zugewandte Kontaktstellen (80, 8a, 8b, ..., 90, 9a, 9b, ..., 80', 8a', 8b', ..., 90', 9a', 9b', ...) vorgesehen sind, die die Leiterbahnen (6, 7) auf dem Etikett (5; 5') und auf dem Träger (1) miteinander elektrisch leitend kontaktieren.

2. Vorrichtung (100, 100') nach Anspruch 1, **dadurch gekennzeichnet, dass** die Leiterbahnen (6, 7) auf dem Etikett (5; 5') und/oder auf dem Träger (1) elektrisch leitfähige Schichten sind, die insbesondere mit einem elektrisch leitfähigen Lack oder mit einer elektrisch leitfähigen Tinte oder Folie erstellt sind oder daraus bestehen.

3. Vorrichtung (100, 100') nach Anspruch 1 oder 2, **dadurch gekennzeichnet, dass** die einander zugewandten Kontaktstellen (80, 8a, 8b, ..., 90, 9a, 9b, ..., 80', 8a', 8b', ..., 90', 9a', 9b', ...), insbesondere des Trägers (1, 10), elektrisch leitfähige Schichten sind, die insbesondere mit einem leitfähigen Lack, einer leitfähigen Folie oder einer elektrisch leitfähigen Tinte erstellt sind oder daraus bestehen, wobei die leitfähige Schicht und/oder die Kontaktstellen oberflächlich leitend, vorzugsweise nicht oxidierend, ausgebildet ist.

4. Vorrichtung (100, 100') nach einem der vorangehenden Ansprüche, **dadurch gekennzeichnet, dass** die NFC-Antenne (4) auf dem Etikett (5) angeordnet ist.

5. Vorrichtung (100, 100') nach einem der vorangehenden Ansprüche, **gekennzeichnet durch** einen weiteren Träger (10), insbesondere aus Papier oder Karton, vorzugsweise bestehend aus demselben Material wie der Träger (1), wobei das Etikett (5; 5') zwischen den beiden Trägern (1, 10) angeordnet ist.

6. Vorrichtung (100, 100') nach Anspruch 5, **dadurch gekennzeichnet, dass** zumindest einer der Schalter (2; 2a, 2b, ...) durch zwei einander auf dem Träger (1) und dem weiteren Träger (10) einander gegenüberliegend und einander zugewandt angeordnete Schalterelemente (11, 12) ausgebildet ist, wobei zumindest eines der Schalterelemente (11, 12) eine isolierende dem jeweils anderen Schalterelement zugewandte Oberflächenschicht (110, 120), insbesondere eine Oxidschicht, aufweist, die vorzugsweise zwischen den beiden Schalterelementen (11, 12) angeordnet ist und diese voneinander im Ausgangszustand elektrisch isoliert,
insbesondere dass die Schalterelemente (11, 12) derart angeordnet sind, dass die zumindest eine isolierende Oberflächenschicht (110, 120) von einem der Schalterelemente (11, 12) bei Beaufschlagung mit einer Kraft normal zur Ausdehnungsebene des Trägers (1) gegebenenfalls bricht oder reißt oder elastisch verformt wird und ein Kontakt zwischen den beiden Schalterelementen (11, 12) entsteht und sich der Schalter (2; 2a, 2b, ...) somit im aktivierten Zustand befindet.

7. Vorrichtung (100, 100') nach Anspruch 6, **dadurch gekennzeichnet,**
- **dass** die auf dem Träger (1) verlaufenden Schalterelemente (11) zwei durch eine Unterbrechung (13) unterbrochene Anschlüsse aufweisen, die im Ausgangszustand voneinander elektrisch isoliert sind, und
- **dass** auf dem den Schalterelementen (11) gegenüberliegenden Bereich des weiteren Trägers (10) weitere Schalterelemente (12) angeordnet sind, die dazu ausgebildet sind, bei Kraftbeaufschlagung in elektrisch leitenden Kontakt mit jedem der Anschlüsse des jeweils zugehörigen Schalterelements (11) zu treten, derart die Unterbrechung (13) zu überbrücken und die durch die Unterbrechung (13) voneinander elektrisch getrennten Anschlüsse des jeweiligen Schalterelements (11) elektrisch leitend zu verbinden.

8. Vorrichtung (100, 100') nach Anspruch 6 oder 7, **dadurch gekennzeichnet, dass** zumindest eines der Schalterelemente (11), gegebenenfalls beide Schalterelemente (11, 12), durch eine Schicht aus leitendem Material mit oberflächlich isolierender Beschichtung, insbesondere aus oberflächlich oxidiertem Aluminium, oder mit einem oberflächlich leitfähigen Material, insbesondere Silberleitlack, welches vorzugsweise mit einem partiell aufgetragenen, aushärtenden, und vorzugsweise elektrisch isolierenden, Material, insbesondere UV-härtendem, hochauftragendem Lack oder Klebstoff, beschichtet ist, ausgebildet ist, und wobei gegebenenfalls das gegenüberliegende Schalterelement mit oberflächlich elektrisch leitfähigem Material, insbesondere Silberleitlack, ausgebildet ist,
wobei insbesondere der Träger (1) und der weitere Träger (10) miteinander verklebt sind, und derjenige Bereich des Trägers (1) und/oder des weiteren Trägers (10) im Bereich der Schalterelemente (11, 12) und vorzugsweise auch innerhalb einer Umgebung (137) um die Schalterelemente (11, 12) von dem die beiden Träger (1; 10) miteinander verbindenden Klebstoff freigestellt ist.

9. Vorrichtung (100, 100') nach einem der vorangehenden Ansprüche, **dadurch gekennzeichnet, dass** die Schalter (2; 2a, 2b, ...) jeweils separat auf weiteren Etiketten (14) angeordnet sind, wobei diese weiteren Etiketten (14) auf dem Träger (1), gegebenenfalls zwischen den Trägern (1, 10) oder auf einem der Träger (1, 10) angeordnet sind.

10. Vorrichtung (100) nach einem der vorangehenden Ansprüche, **dadurch gekennzeichnet,**
- **dass** die NFC-Antenne (4) und die NFC-Chips (3; 3a, 3b, ...) auf dem Etikett (5) angeordnet sind,
- **dass** die NFC-Antenne (4) auf dem Etikett (5), insbesondere aufgedruckt, geätzt oder ausgestanzt, ausgebildet ist und eine Mehrzahl von Windungen (15) sowie einen Innenanschluss (16) und einen Außenanschluss (17) aufweist, und
- **dass** eine Überbrückung (18) vorgesehen ist, die mit dem Innenanschluss (16) elektrisch leitend verbunden ist, wobei die Überbrückung (18) isoliert von den Windungen (15) in den Bereich außerhalb der NFC-Antenne (4) geführt ist,
- **dass** jeweils einer der Anschlüsse jedes der auf dem Etikett (5) befindlichen NFC-Chips (3; 3a, 3b, ...) mit jeweils einer Kontaktstelle (9a, 9b, ...) elektrisch leitend verbunden ist,
- **dass** der jeweils andere Anschluss jedes der auf dem Etikett (5) befindlichen NFC-Chips (3; 3a, 3b, ...) über die Überbrückung (18) mit dem Innenanschluss (16) der NFC-Antenne (4) elektrisch leitend verbunden ist,
- **dass** der Außenanschluss (17) der NFC-Antenne (4) an eine weitere auf dem Etikett (5) angeordnete weitere Kontaktstelle (90) elektrisch leitend angeschlossen ist, und
- **dass** jede der Kontaktstellen (9a, 9b, ...) über eine auf dem Träger (1) verlaufende Leiterbahn (6) mit dem Außenanschluss (17) über die weitere Kontaktstelle (90') elektrisch leitend verbunden ist, wobei in jeder dieser Leiterbahnen (6) jeweils ein im Ausgangszustand unterbrochener Schalter (2; 2a, 2b, ...) angeordnet ist.

11. Vorrichtung (100') nach einem der vorangehenden Ansprüche 1 bis 3 oder 5 bis 9, **dadurch gekennzeichnet,**
- **dass** die NFC-Antenne (4) auf dem Träger (1), insbesondere aufgedruckt, geätzt oder ausgestanzt, ausgebildet ist und eine Mehrzahl von Windungen (15) sowie einen Innenanschluss (16) und einen Außenanschluss (17) aufweist, und wobei die einzelnen Windungen (15) der NFC-Antenne (4) in zumindest einem Überbrückungsbereich (51) nebeneinander beabstandet, insbesondere parallel, verlaufen,
- **dass** das Etikett (5') den Überbrückungsbereich (51) überragend angeordnet ist und eine Kontaktstelle (90) aufweist, die mit dem Innenanschluss (16) der NFC-Antenne (4) elektrisch leitend kontaktiert ist,
- **dass** jeweils ein Anschluss der auf dem Etikett (5') befindlichen NFC-Chips (3; 3a, 3b, ...) elektrisch leitend mit dieser Kontaktstelle (90) verbunden ist, und
- **dass** der jeweils andere Anschluss jedes der auf dem Etikett (5') befindlichen NFC-Chips (3; 3a, 3b, ...) mit jeweils einer weiteren Kontaktstelle (9a, 9b, ...) mit einem Bereich des Trägers (1) leitend kontaktiert ist, der sich außerhalb der NFC-Antenne (4) befindet, und
- **dass** jede der weiteren Kontaktstellen (9a, 9b, ...) über jeweils eine der auf dem Träger (1) verlaufenden Leiterbahnen (6) mit dem Außenanschluss (17) der NFC-Antenne (4) elektrisch leitend verbunden ist, wobei in jeder der Leiterbahnen (6) jeweils ein im Ausgangszustand unterbrochener Schalter (2; 2a, 2b, ...) angeordnet ist.

12. Vorrichtung nach einem der vorangehenden Ansprüche, **dadurch gekennzeichnet, dass** die NFC-Antenne (4)
- Außenabmessungen mit einer Breite von 40 bis 80 mm, insbesondere 60 bis 80 mm, und einer Höhe von 110 bis 150 mm, vorzugsweise einer Breite von 74 mm und einer Höhe von 131 mm aufweist und/oder
- eine Anzahl von 3 bis 7 Windungen, insbesondere mit einer Linienstärke von jeweils kleiner als 3 mm, vorzugsweise 4 Windungen mit einer Linienstärke von 1,5 bis 2,5 mm und einer Schichtdicke von kleiner oder gleich 40 µm, insbesondere, wenn die NFC-Antenne (4) mittels Silberleitlack im Siebdruckverfahren auf Papier gedruckt wird, aufweist, und/oder
- insbesondere einen Gesamtwiderstand von kleiner oder gleich 25 Ohm aufweist.

13. Anordnung umfassend eine Vorrichtung (100, 100') nach einem der Ansprüche 1 bis 12 sowie ein NFC-fähiges Datenkommunikationsgerät (60), das über die NFC-Antenne (4) mit einem der NFC-Chips (3; 3a, 3b, ...) bei Betätigung eines der Schalter in Datenkommunikationsverbindung steht.

## Claims

1. Device (100, 100'), in particular printed item, comprising
- a, preferably flexible, carrier (1), in particular consisting of paper or cardboard,
- a number of switches (2; 2a, 2b, ...) that are arranged on the carrier (1) and in their respective initial state are interrupted,
- a number of NFC chips (3; 3a, 3b, ...) each assigned to at least one switch,
- an NFC antenna (4),
- wherein the switches (2; 2a, 2b, ...) and the NFC chips (3; 3a, 3b, ...) assigned to them are connected with one another in series, and the individual series circuits thus produced, each comprising a switch (2; 2a, 2b, ...) and the NFC chip (3; 3a, 3b, ...) assigned to it, are in each case connected to the NFC antenna (4),
**characterised in that**
- the device comprises a label (5; 5') with a base body (50) in the form of a foil, wherein the label (5; 5') is brought into planar connection with the carrier (1),
- the individual NFC chips (3; 3a, 3b, ...) are arranged on the label (5; 5'),
- the switches (2; 2a, 2b, ...) are arranged on the carrier (1) in a region that is different from the label (5; 5'),
- conductor tracks (6, 7) are provided on the carrier (1), optionally also on the label (5; 5'), for the electrical connection of the switches (2; 2a, 2b, ...), the NFC chips (3; 3a, 3b, ...) and the NFC antenna (4), and
- contact points (80, 8a, 8b, ... 90, 9a, 9b, ... 80', 8a', 8b', ... 90', 9a', 9b', ...) that face one another are provided on the label (5; 5') and on the carrier (1) and make electrically conductive contact between the conductor tracks (6, 7) on the label (5; 5') and on the carrier (1).

2. Device (100, 100') according to claim 1, **characterised in that** the conductor tracks (6, 7) on the label (5; 5') and/or on the carrier (1) are electrically conductive layers that are produced in particular with an electrically conductive lacquer or with an electrically conductive ink or foil or consist thereof.

3. Device (100, 100') according to claim 1 or 2, **characterised in that** the contact points (80, 8a, 8b, ... 90, 9a, 9b, ... 80', 8a', 8b', ... 90', 9a', 9b', ...) that face one another, in particular of the carrier (1, 10), are electrically conductive layers, which are produced in particular with a conductive lacquer, a conductive foil or an electrically conductive ink or consist thereof, wherein the conductive layer and/or the contact points are configured to be surface-conductive, preferably non-oxidising.

4. Device (100, 100') according to any one of the preceding claims, **characterised in that** the NFC antenna (4) is arranged on the label (5).

5. Device (100, 100') according to any one of the preceding claims, **characterised by** a further carrier (10), in particular of paper or cardboard, preferably consisting of the same material as the carrier (1), wherein the label (5; 5') is arranged between the two carriers (1, 10).

6. Device (100, 100') according to claim 5, **characterised in that** at least one of the switches (2; 2a, 2b, ...) is configured by two switch elements (11, 12) arranged opposite one another and facing one another on the carrier (1) and the further carrier (10), wherein at least one of the switch elements (11, 12) has an insulating surface layer (110, 120) facing the respective other switch element, in particular an oxide layer, which is preferably arranged between the two switch elements (11, 12) and electrically insulates them from one another in the initial state,
in particular **in that** the switch elements (11, 12) are arranged in such a way that the at least one insulating surface layer (110, 120) of one of the switch elements (11, 12) breaks or tears or is elastically deformed as appropriate when a force normal to the extension plane of the carrier (1) is applied and a contact is produced between the two switch elements (11, 12) and the switch (2; 2a, 2b, ...) is thus in the activated state.

7. Device (100, 100') according to claim 6, **characterised in that**
- the switch elements (11) extending on the carrier (1) have two terminals that are interrupted by an interruption (13) and are electrically insulated from one another in the initial state, and
- further switch elements (12) are arranged on the region of the further carrier (10) opposite the switch elements (11), which further switch elements are configured to come into electrically conductive contact with each of the terminals of the respective associated switch element (11) when force is applied, in such a way as to bridge the interruption (13) and to electrically conductively connect the terminals of the respective switch element (11) that are electrically separated from one another by the interruption (13).

8. Device (100, 100') according to claim 6 or 7, **characterised in that** at least one of the switch elements (11), optionally both switch elements (11, 12), is configured by a layer of conductive material with a surface-insulating coating, in particular of surface-oxidised aluminium, or with a surface-conductive material, in particular conductive silver lacquer, which is preferably coated with a partially applied, curing, and preferably electrically insulating, material, in particular UV-curing, high-application lacquer or adhesive, and wherein, optionally, the opposite switch element is configured with electrically surface-conductive material, in particular conductive silver lacquer,
wherein in particular the carrier (1) and the further carrier (10) are bonded to one another, and that region of the carrier (1) and/or of the further carrier (10) in the region of the switch elements (11, 12) and preferably also within a surrounding area (137) around the switch elements (11, 12) is free from the adhesive that bonds the two carriers (1; 10) to one another.

9. Device (100, 100') according to any one of the preceding claims, **characterised in that** the switches (2; 2a, 2b, ...) are each arranged separately on further labels (14), wherein these further labels (14) are arranged on the carrier (1), optionally between the carriers (1, 10) or on one of the carriers (1, 10).

10. Device (100) according to any one of the preceding claims, **characterised in that**
- the NFC antenna (4) and the NFC chips (3; 3a, 3b, ...) are arranged on the label (5),
- the NFC antenna (4) is configured on the label (5), in particular printed, etched or punched out, and has a plurality of turns (15) and an inner terminal (16) and an outer terminal (17), and
- a bridge (18) is provided, which is electrically conductively connected to the inner terminal (16), wherein the bridge (18) is led into the region outside the NFC antenna (4) in a manner insulated from the turns (15),
- in each case one of the terminals of each of the NFC chips (3; 3a, 3b, ...) located on the label (5) is electrically conductively connected to in each case one contact point (9a, 9b, ...),
- in each case the other terminal of each of the NFC chips (3; 3a, 3b, ...) located on the label (5) is electrically conductively connected via the bridge (18) to the inner terminal (16) of the NFC antenna (4),
- the outer terminal (17) of the NFC antenna (4) is electrically conductively connected to a further contact point (90) arranged on the label (5), and
- each of the contact points (9a, 9b, ...) is electrically conductively connected via a conductor track (6) extending on the carrier (1) to the outer terminal (17) via the further contact point (90'), wherein a switch (2; 2a, 2b, ...) that is interrupted in the initial state is arranged in each of these conductor tracks (6).

11. Device (100') according to any one of the preceding claims 1 to 3 or 5 to 9, **characterised in that**
- the NFC antenna (4) is configured on the carrier (1), in particular printed, etched or punched out, and has a plurality of turns (15) and an inner terminal (16) and an outer terminal (17), and wherein the individual turns (15) of the NFC antenna (4) extend in at least one bridging region (51) at a spacing from one another, in particular parallel,
- the label (5') is arranged so as to project beyond the bridging region (51) and has a contact point (90) that is in electrically conductive contact with the inner terminal (16) of the NFC antenna (4),
- in each case one terminal of the NFC chips (3; 3a, 3b, ...) located on the label (5') is electrically conductively connected to this contact point (90), and
- the respective other terminal of each of the NFC chips (3; 3a, 3b, ...) located on the label (5') is in conductive contact with a respective further contact point (9a, 9b, ...) with a region of the carrier (1) that is located outside the NFC antenna (4), and
- each of the further contact points (9a, 9b, ...) is electrically conductively connected to the external terminal (17) of the NFC antenna (4) via in each case one of the conductor tracks (6) extending on the carrier (1), wherein a respective switch (2; 2a, 2b, ...) that is interrupted in the initial state is arranged in each of the conductor tracks (6).

12. Device according to any one of the preceding claims, **characterised in that** the NFC antenna (4)
- has external dimensions with a width of 40 to 80 mm, in particular 60 to 80 mm, and a height of 110 to 150 mm, preferably a width of 74 mm and a height of 131 mm, and/or
- has a number of turns of 3 to 7, in particular with a line thickness of in each case less than 3 mm, preferably 4 turns with a line thickness of 1.5 to 2.5 mm and a layer thickness less than or equal to 40 µm, in particular if the NFC antenna (4) is printed on paper by means of silver conductive lacquer using the screen printing method, and/or
- in particular has a total resistance less than or equal to 25 ohms.

13. Arrangement comprising a device (100, 100') according to any one of claims 1 to 12, and an NFC-enabled data communication device (60) that is in data communication connection with one of the NFC chips (3; 3a, 3b, ...) via the NFC antenna (4) upon actuation of one of the switches.

## Revendications

1. Dispositif (100, 100'), en particulier produit imprimé, comprenant
- un support (1), de préférence flexible, en particulier constitué de papier ou de carton,
- un certain nombre de commutateurs (2 ; 2a, 2b, ...) disposés sur le support (1) et interrompus dans leur état initial respectif,
- un nombre de puces NFC (3 ; 3a, 3b, ...) associées respectivement à au moins un commutateur,
- une antenne NFC (4),
- dans lequel les commutateurs (2 ; 2a, 2b, ...) et les puces NFC (3 ; 3a, 3b, ...) qui leur sont associées sont montés en série les uns avec les autres et les circuits en série individuels ainsi réalisés comprenant respectivement un commutateur (2 ; 2a, 2b, ...) et la puce NFC (3 ; 3a, 3b, ...) qui lui est associée sont respectivement raccordés à l'antenne NFC (4),
**caractérisé en ce**
- **que** le dispositif comprend une étiquette (5 ; 5') avec un corps de base (50) en forme de feuille, dans lequel l'étiquette (5 ; 5') est mise en liaison à plat avec le support (1),
- **que** les puces NFC individuelles (3 ; 3a, 3b, ...) sont disposées sur l'étiquette (5 ; 5'),
- **que** les commutateurs (2 ; 2a, 2b, ...) sont disposés sur le support (1) dans une zone différente de l'étiquette (5 ; 5'),
- **que**, pour la connexion électrique des commutateurs (2 ; 2a, 2b, ...), des puces NFC (3 ; 3a, 3b, ...) et de l'antenne NFC (4), des pistes conductrices (6, 7) sont prévues sur le support (1), le cas échéant aussi sur l'étiquette (5 ; 5'), et
- **que** sont prévus sur l'étiquette (5 ; 5') et sur le support (1) des points de contact (80, 8a, 8b, ..., 90, 9a, 9b, ..., 80', 8a', 8b', ..., 90', 9a', 9b', ...) tournés les uns vers les autres, qui mettent en contact électriquement conducteur les pistes conductrices (6, 7) sur l'étiquette (5 ; 5') et sur le support (1).

2. Dispositif (100, 100') selon la revendication 1, **caractérisé en ce que** les pistes conductrices (6, 7) sur l'étiquette (5 ; 5') et/ou sur le support (1) sont des couches électriquement conductrices, qui sont réalisées en particulier avec un vernis électriquement conducteur ou avec une encre ou un film électriquement conducteur ou qui en sont constituées.

3. Dispositif (100, 100') selon la revendication 1 ou 2, **caractérisé en ce que** les points de contact (80, 8a, 8b, ..., 90, 9a, 9b, ..., 80', 8a', 8b', ..., 90', 9a', 9b', ...) tournés les uns vers les autres, en particulier du support (1, 10), sont des couches électriquement conductrices, qui sont réalisées en particulier avec un vernis conducteur, un film conducteur ou une encre électriquement conductrice ou qui en sont constituées, dans lequel la couche conductrice et/ou les points de contact sont réalisés de manière à être conducteurs en surface, de préférence de manière non oxydante.

4. Dispositif (100, 100') selon l'une quelconque des revendications précédentes, **caractérisé en ce que** l'antenne NFC (4) est disposée sur l'étiquette (5).

5. Dispositif (100, 100') selon l'une quelconque des revendications précédentes, **caractérisé par** un support supplémentaire (10), en particulier en papier ou en carton, de préférence constitué du même matériau que le support (1), dans lequel l'étiquette (5 ; 5') est disposée entre les deux supports (1, 10).

6. Dispositif (100, 100') selon la revendication 5, **caractérisé en ce qu'**au moins un des commutateurs (2 ; 2a, 2b, ...) est réalisé par deux éléments de commutation (11, 12) disposés l'un en face de l'autre sur le support (1) et sur le support supplémentaire (10) et tournés l'un vers l'autre, dans lequel au moins un des éléments de commutation (11, 12) présente une couche superficielle isolante (110, 120) tournée vers l'autre élément de commutation respectif, en particulier une couche d'oxyde, qui est de préférence disposée entre les deux éléments de commutation (11, 12) et isole ceux-ci électriquement l'un de l'autre dans l'état initial,
en particulier **en ce que** les éléments de commutation (11, 12) sont disposés de sorte que l'au moins une couche superficielle isolante (110, 120) d'un des éléments de commutation (11, 12), en cas d'application d'une force perpendiculaire au plan d'extension du support (1), le cas échéant se rompt ou se déchire ou se déforme élastiquement et qu'un contact se produit entre les deux éléments de commutation (11, 12) et que le commutateur (2 ; 2a, 2b, ...) se trouve ainsi à l'état activé.

7. Dispositif (100, 100') selon la revendication 6, **caractérisé en ce**
- **que** les éléments de commutation (11) s'étendant sur le support (1) présentent deux raccords interrompus par une interruption (13), qui sont isolés électriquement l'un de l'autre dans l'état initial, et
- **que** sur la zone du support supplémentaire (10) opposée aux éléments de commutation (11), des éléments de commutation supplémentaires (12) sont disposés, qui sont conçus pour entrer en contact électriquement conducteur avec chacun des raccords de l'élément de commutation (11) respectivement associé en cas d'application d'une force, de manière à ponter l'interruption (13) et à relier de manière électriquement conductrice les raccords de l'élément de commutation (11) respectif qui sont électriquement séparées l'une de l'autre par l'interruption (13).

8. Dispositif (100, 100') selon la revendication 6 ou 7, **caractérisé en ce qu'**au moins un des éléments de commutation (11), le cas échéant les deux éléments de commutation (11, 12), est recouvert d'une couche de matériau conducteur avec un revêtement isolant en surface, en particulier en aluminium oxydé en surface, ou avec un matériau conducteur en surface, en particulier une laque conductrice d'argent, laquelle est de préférence revêtue d'un matériau partiellement appliqué, durcissant et de préférence électriquement isolant, en particulier d'une laque ou d'une colle à haut pouvoir d'application et durcissant aux UV, et dans lequel, le cas échéant, l'élément de commutation opposé est réalisé avec un matériau électriquement conducteur en surface, en particulier une laque conductrice d'argent,
dans lequel en particulier le support (1) et le support supplémentaire (10) sont collés l'un à l'autre, et la zone respective du support (1) et/ou du support supplémentaire (10) dans la zone des éléments de commutation (11, 12) et de préférence aussi à l'intérieur d'un environnement (137) autour des éléments de commutation (11, 12) est exempte de la colle reliant les deux supports (1 ; 10) l'un à l'autre.

9. Dispositif (100, 100') selon l'une quelconque des revendications précédentes, **caractérisé en ce que** les commutateurs (2 ; 2a, 2b, ...) sont respectivement disposés séparément sur des étiquettes supplémentaires (14), dans lequel ces étiquettes supplémentaires (14) sont disposées sur le support (1), le cas échéant entre les supports (1, 10) ou sur un des supports (1, 10).

10. Dispositif (100) selon l'une quelconque des revendications précédentes, **caractérisé en ce**
- **que** l'antenne NFC (4) et les puces NFC (3 ; 3a, 3b, ...) sont disposées sur l'étiquette (5),
- **que** l'antenne NFC (4) est réalisée sur l'étiquette (5), en particulier par impression, gravure ou estampage, et présente une pluralité de spires (15) ainsi qu'un raccord intérieur (16) et un raccord extérieur (17), et
- **qu'**un pontage (18) est prévu, qui est relié de manière électriquement conductrice au raccord intérieur (16), dans lequel le pontage (18) est guidé de manière isolée des spires (15) dans la zone à l'extérieur de l'antenne NFC (4),
- **que** respectivement l'un des raccords de chacune des puces NFC (3 ; 3a, 3b, ...) se trouvant sur l'étiquette (5) est relié de manière électriquement conductrice à respectivement un point de contact (9a, 9b, ...),
- **que** l'autre raccord respectif de chacune des puces NFC (3; 3a, 3b, ...) se trouvant sur l'étiquette (5) est relié de manière électriquement conductrice au raccord intérieur (16) de l'antenne NFC (4) par l'intermédiaire du pontage (18),
- **que** le raccord extérieur (17) de l'antenne NFC (4) est raccordé de manière électriquement conductrice à un point de contact supplémentaire (90) disposé sur l'étiquette (5), et
- **que** chacun des points de contact (9a, 9b, ...) est relié de manière électriquement conductrice au raccord extérieur (17) par l'intermédiaire d'une piste conductrice (6) s'étendant sur le support (1), par l'intermédiaire du point de contact supplémentaire (90'), dans lequel un commutateur (2 ; 2a, 2b, ...) interrompu à l'état initial est disposé dans chacune de ces pistes conductrices (6).

11. Dispositif (100') selon l'une quelconque des revendications précédentes 1 à 3 ou 5 à 9, **caractérisé en ce**
- **que** l'antenne NFC (4) est réalisée sur le support (1), en particulier par impression, gravure ou estampage, et présente une pluralité de spires (15) ainsi qu'un raccord intérieur (16) et un raccord extérieur (17), et dans lequel les spires individuelles (15) de l'antenne NFC (4) s'étendent à distance les unes des autres, en particulier parallèlement, dans au moins une zone de pontage (51),
- **que** l'étiquette (5') est disposée sur la zone de pontage (51) de manière à dépasser et présente un point de contact (90) qui est en contact électriquement conducteur avec le raccord intérieur (16) de l'antenne NFC (4),
- **que** respectivement un raccord des puces NFC (3 ; 3a, 3b, ...) se trouvant sur l'étiquette (5') est relié de manière électriquement conductrice à ce point de contact (90), et
- **que** l'autre raccord respectif de chacune des puces NFC (3 ; 3a, 3b, ...) se trouvant sur l'étiquette (5') est en contact conducteur avec un point de contact supplémentaire (9a, 9b, ...) avec une zone du support (1), qui se trouve à l'extérieur de l'antenne NFC (4), et
- **que** chacun des points de contact supplémentaires (9a, 9b, ...) est relié de manière électriquement conductrice au raccord extérieur (17) de l'antenne NFC (4) par l'intermédiaire respectivement d'une des pistes conductrices (6) s'étendant sur le support (1), dans lequel un commutateur (2 ; 2a, 2b, ...) interrompu à l'état initial étant disposé respectivement dans chacune des pistes conductrices (6).

12. Dispositif selon l'une quelconque des revendications précédentes, **caractérisé en ce que** l'antenne NFC (4)
- présente des dimensions extérieures avec une largeur de 40 à 80 mm, en particulier de 60 à 80 mm, et une hauteur de 110 à 150 mm, de préférence une largeur de 74 mm et une hauteur de 131 mm, et/ou
- présente un nombre de 3 à 7 spires, en particulier avec une épaisseur de ligne respectivement inférieure à 3 mm, de préférence 4 spires avec une épaisseur de ligne de 1,5 à 2,5 mm et une épaisseur de couche inférieure ou égale à 40 µm, en particulier lorsque l'antenne NFC (4) est imprimée sur papier au moyen d'un vernis conducteur d'argent par sérigraphie, et/ou
- présente en particulier une résistance totale inférieure ou égale à 25 ohms.

13. Disposition comprenant un dispositif (100, 100') selon l'une quelconque des revendications 1 à 12, ainsi qu'un appareil de communication de données (60) compatible NFC, qui est en liaison de communication de données avec une des puces NFC (3 ; 3a, 3b, ...) par l'intermédiaire de l'antenne NFC (4) lors de l'actionnement d'un des commutateurs.
